# EUROPEAN PATENT APPLICATION

(11) **EP 4 641 873 A1**
(43) Date of publication of application: **29.10.2025**
(21) Application number: 23918720.6
(22) Date of filing: 11.05.2023
(51) Int. Cl.: H02J 7/00, H02J 50/10, B25J 5/00, B25J 9/16, B25J 19/00, B62D 57/028, H02K 7/116

(54) **CHARGING STATION AND METHOD FOR CHARGING ROBOT**

(30) Priority: 25.01.2023 KR 20230009568
(71) Applicant: LG Electronics Inc., Yeongdeungpo-gu Seoul 07336 (KR)
(72) Inventor: CHOI, Dongkyu, Seoul 08592 (KR); KIM, Seongmin, Seoul 08592 (KR); KIM, Jinju, Seoul 08592 (KR)
(74) Representative: Vossius & Partner Patentanwälte Rechtsanwälte mbB
(86) International application number: PCT/KR2023/006423
(87) International publication number: WO 2024/158085

(57) **Abstract**

The embodiments of the present disclosure relate to a charging station and a method of charging a robot, that is configured to charge a robot and at least one of function modules detachably coupled to the robot, the charging station including a station body placed on the ground to that the robot may approach; a robot charging unit coupled to the station body to be rotatably relative to the station body and configured to supply power to the robot and charge it, if electrically connected to the robot; and a function module charging unit detachably coupled to the station body and configured to supply power to the function module and charge it, if electrically connected to the function module.

## Description

### [BACKGROUND]

### [Technical Field]

Embodiments of the present disclosure relate to a charging station and a method of charging a robot, more particularly, a charging station that may charge at least one of a robot and a function module, and a method of charging a robot using the same.

### [Background of the Disclosure]

Recently, with advancement of robot technology, the use of robots is increasing not only in the industrial field but also in the home.

Home robots include robots that perform tasks inside the home such as helping with housework like cleaning or controlling electric hole appliances, robots that use artificial intelligence AI to act as secretaries or provide education to users, or robots that replace pets.

However, conventional home robots have limitations in that they can only perform one of the above functions and cannot perform various functions depending on the user's needs or situations.

Meanwhile, there exist not only as robots that preform their functions while remaining fixed in a specific location but also mobile robots that can move. In particular, for robots used in the home mobile robots that can move around the housing on behalf of the user or follow the user are mainly used.

Among mobile robots, two-wheeled robots have the advantage of being easy to store as they occupy a small area of land, and the advantage of being easy to use in the home with relatively narrow spaces as they have a small turning radius when changing direction.

Household robots, like conventional cleaning-only mobile robots, are powered by built-in batteries, and therefore require periodic charging of the batteries. To this end, a charging station similar to the charging station of conventional cleaning robots may be provided for household robots.

Meanwhile, US Patent Publication No. 2021-0228044 (hereinafter referred to as "Prior Document 1") discloses a base station and a cleaning robot system.

A robot cleaner configured to perform mopping cleaning may be docked to the base station, and the robot cleaner docked to the base station may be charged through a charging unit.

In addition, US Patent Publication No. 2022-0061614 (hereinafter referred to as "prior document 2") discloses a docking station.

A robot cleaner may be docked to the docking station, and the robot cleaner may empty dust stored in the internal space by the docking station.

However, prior documents 1 and 2 disclose the docking and charging of the robot cleaner, but do not disclose changes in the posture of the robot cleaner after docking, and do not disclose a charging unit that charges a function module that provides various functions to the user.

### [DETAILED DESCRIPTION OF THE INVENTION]

### [Technical Problem]

Accordingly, one object of the present disclosure is to solve the above-noted disadvantages of the prior art, and to provide a charging station configured to charge a function module that provides various functions to users as well as robots, and a method of charging a robot using the same.

Another object of the present disclosure is to provide a charging station configured to protect the power supply terminal from external impacts, etc. when the robot is not charging, and a method of charging a robot using the same.

A further object of the present disclosure is to provide a charging station that allows the robot to be accurately placed on the robot charging station without a separate sensor, and a method of charging a robot using the same.

A still further object of the present disclosure is to provide a charging station where both the robot's movements entering the charging station and leaving the charging station are forward movements, and a method of charging a robot using the same.

A still further object of the present disclosure is to provide a charging station where the robot may be stably placed on the charging station, and a method of charging a robot using the same.

### [Technical Solution]

To solve the above objects, a charging station configured to charge a robot and at least one of function modules detachably coupled to the robot, may include a station body placed on the ground to that the robot may approach; a robot charging unit coupled to the station body to be rotatably relative to the station body and configured to supply power to the robot and charge it, if electrically connected to the robot; and a function module charging unit detachably coupled to the station body and configured to supply power to the function module and charge it, if electrically connected to the function module.

The function module charging unit may wirelessly supply power to the function module to charge it.

The robot charging unit may include a charging unit body comprising a mounting surface on which the robot is mounted and configured to rotate by the rotation of the motor; a rotating member configured to rotate in a first direction with respect to the charging unit body, if a load of the robot is applied to one side of the rotating member; a power supply terminal arranged on the other side of the rotating member and configured to be connected to the charging terminal of the robot, if the rotating member is rotated in the first direction; and an elastic member configured to provide elasticity to the rotating member so that the rotating member rotates in a second direction which is the opposite direction to the first direction.

When the rotating member is rotated in the second direction, the power supply terminal may be located in the internal space of the charging unit body.

An outer surface of the robot in contact with the mounting surface may have a curvature corresponding to the curvature of the mounting surface.

The robot charging unit may further include a power transmission unit accommodated in the internal space of the charging unit body together with the motor and configured to transmit power generated by the rotation of the motor to the charging unit body.

The power transmission unit may include a first rotation gear configured to receive the rotational power of the motor and rotate; and a second rotation gear configured to receive the rotational power of the first rotation gear and rotate the charging unit body.

To solve the above objects, a charging station configured to charge a robot and at least one of function modules detachably coupled to the robot, may include a station body placed on the ground to that the robot may approach; and a robot charging unit coupled to the station body to be rotatably relative to the station body and configured to supply power to the robot and charge it, if electrically connected to the robot. The robot charging unit may include a charging unit body on which the robot is mounted and configured to rotate by the rotation of the motor; a rotating member configured to rotate in a first direction with respect to the charging unit body, if a load of the robot is applied to one side of the rotating member; a power supply terminal arranged on the other side of the rotating member and configured to be connected to the charging terminal of the robot, if the rotating member is rotated in the first direction; and an elastic member configured to provide elasticity to the rotating member so that the rotating member rotates in a second direction which is the opposite direction to the first direction.

When the rotating member is rotated in the second direction, the power supply terminal may be located inside the charging unit body.

To solve the above objects, a method of charging a robot, that is performed by a robot system comprising a robot and a charging station configured to supply power to the robot, may include an entry step in which a wheel of the robot moves to approach the charging station and climbs onto the station body of the charging station; a coupling step in which a charging terminal of the robot and a power supply terminal of the charging station are electrically connected to each other so that power is supplied to the robot when the robot is mounted on the charging station; a raising step in which the wheel is raised to a set height so that the wheel is separated from the station body by a set distance; and a rotation step in which the robot charging unit of the charging station rotates together with the robot and changes the direction in which a front side of the robot faces by 180 degrees.

The robot may include a robot body comprising the charging terminal; a leg unit arranged on each side of the robot body and coupled with the wheel configured to roll on the ground; an arm rotatably coupled to each side of the robot body; a suspension motor configured to adjust the coupling angle of the joint structure between an upper link and a lower link of a leg unit; and an arm motor configured to rotate the arm with respect to the robot body, and the raising step may include a driving step of driving the suspension motor so that the distance between the wheel and the robot body decreases; and a fixing step of restricting the movement of the joint structure by contacting a stopper formed on the upper link when the wheel is raised to a set height and a rotating protrusion configured to rotate together with the arm.

The method of charging the robot may further include a release step in which the connection between the charging terminal and the power supply terminal is released; and a return rotation step in which the robot charging unit rotates to return to an initial position after the robot leaves the charging station.

### [Advantageous Effects]

According to the embodiments, there is the effect of being able to charge function modules that provide various functions to users as well as robots.

Furthermore, the power supply terminal of the present invention is located in the internal space of the main body of the charging unit when the robot and the robot charging unit are disconnected. Accordingly, the power supply terminal may be protected from external impacts, etc. when the robot is not being charged.

Still further, the embodiments of the present disclosure have the effect of enabling the robot to be accurately placed on the robot charging unit without a separate sensor, because the placement position is accurately guided during the process of placing the main body housing even if the charging terminal is not in a position corresponding to the power supply terminal.

Still further, according to the embodiments of the present disclosure, the robot charging unit rotates 180 degrees after the robot is coupled to the charging station, so that both the motion of the robot entering the charging station and the motion of the robot leaving the charging station are possible as forward movement, thereby facilitating both the robot's entry into and exit from the charging station.

Still further, the embodiments of the present disclosure have the effect of enabling the robot to be stably installed in the robot charging unit without interference from the station body, since the wheels do not come into contact with the station body even when the robot is installed in the robot charging unit.

### [Description of Drawings]

FIG. 1 is a perspective view to describe a robot according to one embodiment of the present disclosure;
FIG. 2 is a front view of a robot according to one embodiment of the present disclosure;
FIG. 3 is a perspective view of a robot according to one embodiment of the present invention, viewed from different angles;
FIG. 4 is a partially cut-away view to describe power transmission for rotating an arm in a robot according to one embodiment of the present disclosure;
FIG. 5 is a plane view of a robot according to one embodiment of the present disclosure;
FIG. 6 is a bottom view of a robot according to one embodiment of the present disclosure;
FIGS. 7a and 7b are views to describe a structure in which the rotation of an arm is restricted;
FIGS. 8a and 8b are views to describe another example of FIGS. 7a and 7b;
FIG. 9 is a view to describe a state in which a robot according to one embodiment is not moving but waiting;
FIG. 10 is a side view of FIG. 9;
FIGS. 11a and 11b are views to describe a motion that occurs when a robot according to one embodiment falls forward;
FIGS. 12a and 12b are views to describe a motion that occurs when a robot according to one embodiment falls backward;
FIG. 13 is a view to describe a coupling relationship between a robot mask and a robot body in a robot according to one embodiment of the present disclosure;
FIGS. 14a to 14c are views to describe a process of rotating a rotating body of a robot according to one embodiment;
FIGS. 15a to 15c are views to describe a process of coupling a coupling unit of a robot according to one embodiment to a function module;
FIGS. 16 and 17 are perspective views of a function module coupled to a robot according to one embodiment;
FIG. 18 is a block view to describe a control configuration of a robot according to one embodiment;
FIG. 19 is a perspective view of a robot system including a robot, a charging station, and a function module according to one embodiment;
FIG. 20 is a view to describe the configuration of the charging station according to one embodiment;
FIG. 21a is a side cross-sectional view to describe a state in which a robot is mounted to a charging station according to one embodiment;
FIG. 21b is a side cross sectional view to describe a state in which the mounting between the charging station and the robot according to one embodiment is released;
FIG. 22 is a side cross-sectional view to describe a power transfer unit of the charging station according to one embodiment;
FIG. 23 is a perspective view to describe a function module charging unit of the charging station according to one embodiment;
FIG. 24 is a perspective view to describe a state in which a function module charging unit is coupled to both sides of a station body in the charging station according to one embodiment;
FIG. 25 is a view to describe a state in which a robot according to one embodiment transports a function module to the charging station;
FIG. 26 is a flow chart showing a method of charging a robot according to one embodiment;
FIGS. 27a and 27b are views showing an operation corresponding to S100 of FIG. 26;
FIG. 27c is a view showing an operation corresponding to S200 and S300 of FIG. 26;
FIG. 27d is a view showing an operation corresponding to S400 of FIG. 26;
FIG. 27e is a view showing an operation corresponding to S500 of FIG. 26; and
FIG. 27f is a view showing an operation corresponding to S600 of FIG. 26.

### [DESCRIPTION OF SPECIFIC EMBODIMENTS]

Referring to the accompanying drawings, embodiments of the present disclosure will be described in detail.

Description will now be given in detail according to exemplary embodiments disclosed herein, with reference to the accompanying drawings. For the sake of brief description with reference to the drawings, the same or equivalent components may be provided with the same reference numbers, and description thereof will not be repeated.

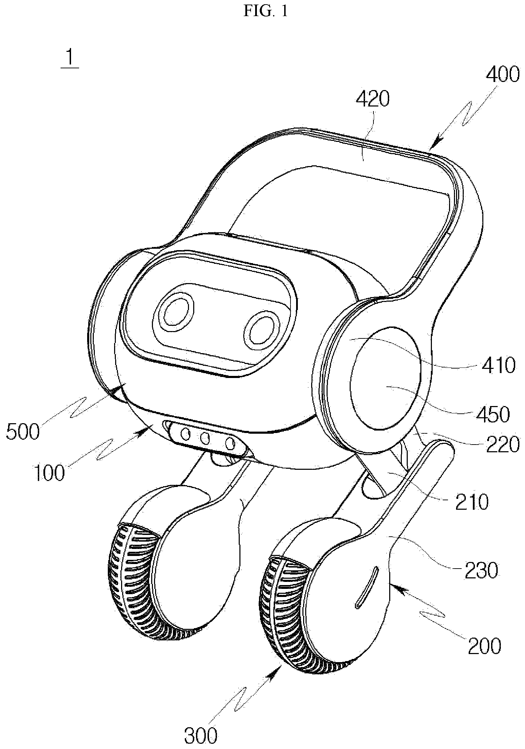

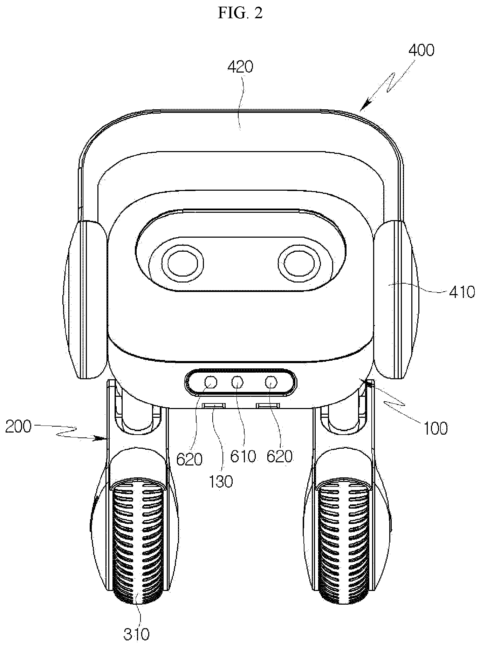

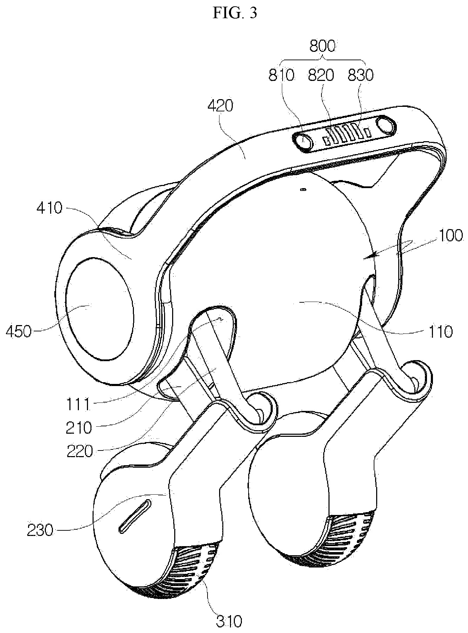

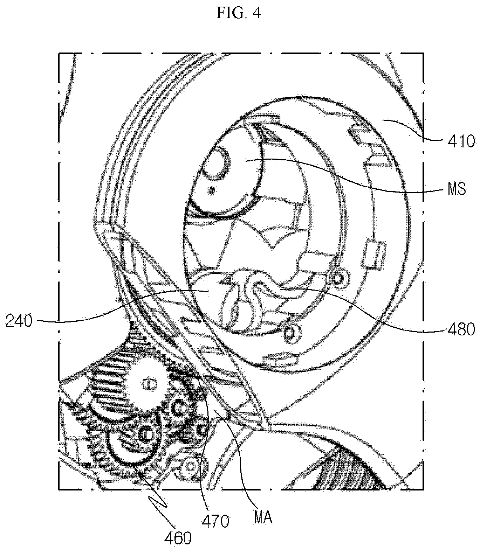

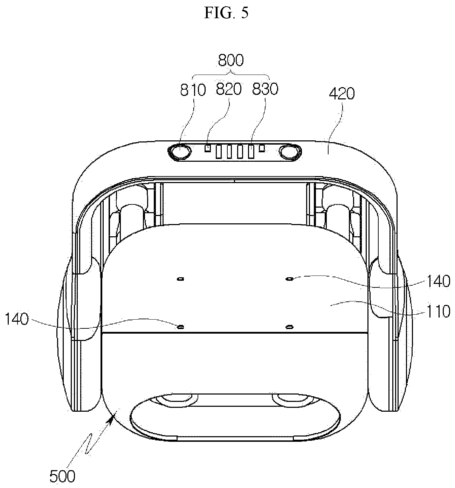

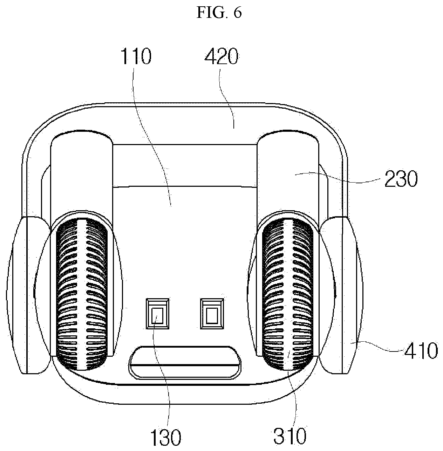

FIG. 1 is a perspective view to describe a robot according to one embodiment of the present disclosure. FIG. 2 is a front view of a robot according to one embodiment of the present disclosure. FIG. 3 is a perspective view of a robot according to one embodiment of the present invention, viewed from different angles. FIG. 4 is a partially cut-away view to describe power transmission for rotating an arm in a robot according to one embodiment of the present disclosure. FIG. 5 is a plane view of a robot according to one embodiment of the present disclosure. FIG. 6 is a bottom view of a robot according to one embodiment of the present disclosure.

Referring to FIGS. 1 to 6, the robot 1 according to one embodiment of the present disclosure will be described as follows.

The robot 1 according to the embodiment of the present disclosure is placed on the floor and moves along the floor surface (B). Accordingly, the following description will be made by determining the up-down direction based on the state in which the robot 1 is placed on the floor.

The direction in which a first camera 610a to be described later is placed may be set as the front direction or forward of the robot 1 and explained. In addition, the direction opposite to the front is set as the rear direction or rearward of the robot 1 and explained.

The 'lowest portion' of each configuration described in the embodiment of the present invention may be the portion that is positioned lowest in each configuration when the robot 1 according to the embodiment of the present invention is used while placed on the floor, or may be the portion closest to the floor.

The robot 1 according to one embodiment may include a robot body 100, a leg unit 200, a wheel unit 300, an arm 400, and a robot mask 500. At this time, the leg unit 200 is coupled to the robot body 100, and the wheel unit 300 is coupled to the leg unit 200. In addition, the arm 400 is pivotally coupled to both sides of the robot body 100. In addition, the robot mask 500 is detachably coupled to the robot body 100.

### Robot Body:

Referring to FIGS. 1 to 6, the robot body 100 of the robot 1 according to one embodiment will be described as follows.

Each component of the robot 1 may be coupled to the robot body 100. For example, the robot mask 500 may be detachably coupled to the robot body 100. In addition, the arm 400 is pivotally coupled to the robot body 100. The arm 400 may be pivotally connected to both ends of the robot body 100. The robot body 100 may be configured to perform additional functions by being connected to a function module through the arm 400. In addition, the robot body 100 may be configured to implement a standby posture for power saving or a posture for getting up after falling through the arm 400.

Some components forming the robot 1 may be accommodated inside the robot body 100.

A body housing 110 may form the outer shape of the robot body 100. The inner space of the body housing 110 may accommodate one or more motors including a suspension motor MS, one or more sensors, and a battery 800.

Also, although not shown in the drawings, at least one bumper may be provided inside the body housing 110.

The bumper may be provided to be relatively movable with respect to the body housing 110. For example, the bumper may be coupled to the body housing 110 so as to be reciprocally movable along the front-rear direction of the body housing 110.

The bumper may be coupled along some area or the entire front edge of the body housing 110. In addition, the bumper may be arranged on the inner rear side of the body housing 110.

With this configuration, when the robot 1 collides with another object or person, the bumper may absorb the shock applied to the robot body 100 and protect the robot body 100 and the components disposed inside the robot body 100.

A pair of leg units 200 may be coupled inside the robot body housing 110. The pair of leg units 200 may penetrate the robot body housing 110 and be exposed to the outside.

Specifically, a first link 210 and a second link 220 may be rotatably coupled inside the robot body housing 110. For example, a link frame (not shown) to which the first link 210 and the second link 220 are linked may be provided inside the robot body housing 110.

In addition, a suspension motor MS may be accommodated inside the robot body housing 110. For example, a suspension motor MS may be placed in a link frame (not shown). The suspension motor MS may be connected to the first link 210.

A pair of leg guide holes 111 may be formed in the robot body housing 110. For example, the pair of leg guide holes 111 may be formed in parallel along the front-rear direction of the robot body housing 110.

With this configuration, the leg unit 200 may rotate along the leg guide holes 111, and the rotational movement range of the leg unit 200 may be guided.

The robot body housing 110 may be formed in a shape in which the horizontal width (or diameter) is larger than the vertical height. For example, the robot body housing 110 may be formed in a shape similar to an ellipsoid.

Such the robot body 100 may help the robot 1 to have a stable structure and provide a structure that is advantageous for maintaining balance when the robot 1 moves (or drives).

The robot body 100 may be placed vertically above the wheel 310 to be described later. The load of the robot body 100 may be transferred to the wheel 310 through the leg unit 200, and the wheel 310 may support the leg unit 200 and the robot body 100. With this configuration, the wheel 310 may stably support the load of the robot body 100.

The robot body 100 may include a display 120. The display 120 may be mounted to the body housing 110. The display 120 may be formed in a flat shape. The display 120 may be placed at a predetermined angle with respect to the ground. For example, the display 120 may be placed at a position facing forward and upward. With this configuration, when the robot 1 approaches the user and the user looks at the robot 1, the display 120 may be made visible.

Meanwhile, the display 120 may visually transmit information about the operating status of the robot 1 to the user.

The display 120 may be formed of any one of a light emitting diode (LED), a liquid crystal display (LCD), a plasma display panel, and an organic light emitting diode (OLED).

The display 120 may display information such as operating time information of the robot 1, power information of the battery 800, etc.

According to embodiments, the display 120 may be an input unit 125. That is, the display 120 may receive a control command from a user. For example, the display 120 may be a touch screen that visually displays an operating status and receives a control command from a user.

The display 120 may display the facial expression of the robot 1. Alternatively, the display 120 may display the pupils of the robot 1. The current state of the robot 1 may be personified and expressed as an emotion through the shape of the face or the shape of the pupils displayed on the display 120. For example, when the user goes out and returns home, the display 120 may display a smiling facial expression or smiling eye shape. This provides the effect of the user feeling a sense of communication with the robot 1.

A charging terminal 130 may be arranged in the robot body housing 110. For example, the charging terminal 130 may be arranged facing the ground. As an example, the charging terminal 130 may be arranged to face the ground. As another example, the charging terminal 130 may be arranged at a predetermined angle with the ground. With this configuration, when the robot 1 is coupled with a robot charging station 1000, the charging terminal 130 may come into contact with a terminal provided on the robot charging station 1000.

The charging terminal 130 may be electrically connected to the robot charging station 1000. With this configuration, the robot 1 may be supplied with power through the charging terminal 130. The power supplied to the charging terminal 130 may be supplied to the battery (B). In addition, the robot 1 may receive an electric signal through the charging terminal 130. The electric signal transmitted through the charging terminal 130 may be received by the control unit 700.

Meanwhile, a mapping camera 610 may be placed on the front lower portion of the robot body housing 110. For example, the mapping camera 610 may be placed on a center line passing through the left and right centers of the robot body housing 110. With this configuration, the mapping camera 610 may detect an object or person placed in front of the robot 1.

In addition, an IR sensor 620 may be placed at the front lower portion of the robot body housing 110. For example, a pair of IR sensors 620 may be placed in the left and right directions at a predetermined interval. With this configuration, the IR sensor 620 may detect the position of a light source that generates infrared rays.

The IR sensor 620 may be placed close to the mapping camera 610. For example, the mapping camera 610 may be placed between the pair of IR sensors 620.

With this arrangement, the IR sensor 620 may detect the light radiated by a lamp of a function module 900 or a light emitting unit 1213 of the charging station 1000, and when the robot body 100 approaches the lamp or light emitting unit 1213, the mapping camera 610 may detect the shape of the function module 900 or the charging station 1000.

### Leg unit:

Referring to FIGS. 1 to 6, the leg unit 200 of the robot 1 according to one embodiment of the present invention is described as follows.

The leg unit 200 is coupled to the robot body 100 and may support the robot body 100. For example, a pair of leg units 200 may be provided and are respectively coupled to the inside of the robot body housing 110. The pair of leg units 200 may be arranged symmetrically (linearly symmetrically) to each other. At this time, at least a portion of the leg units 200 is arranged closer to the ground than the robot body 100. Accordingly, the robot body 100 may move in a manner of standing on the ground by the pair of leg units 200. That is, the gravity applied to the robot body 100 may be supported by the leg units 200, and the height of the robot body 100 may be maintained.

The leg units 200 include a first link 210, a second link 220, and a third link 230. At this time, the first link 210 and the second link 220 are rotatably coupled to the robot body 100 and the third link 230, respectively. That is, the first link 210 and the second link 220 are link-coupled to the robot body 100 and the third link 230, respectively.

The first link 210 is linked to the left and right sides inside the robot body 100.

The first link 210 is connected to the suspension motor MS. For example, the first link 210 may be connected directly or through a gear to a shaft of the suspension motor MS. With this configuration, the first link 210 receives driving force from the suspension motor MS.

The first link 210 is formed in a frame shape, and the suspension motor MS is connected to one side in the longitudinal direction, and the third link 230 is coupled to the other side in the longitudinal direction. At this time, one side of the first link 210 connected to the suspension motor MS may be arranged farther from the ground than the other side coupled to the third link 230.

One side of the first link 210 is coupled to a leg support (not shown) provided inside the robot body housing 110. The first link 210 may be rotatably coupled to the leg support. For example, one side of the first link 210 may be formed in a disk shape or a circular plate shape. Accordingly, one side of the first link 210 may be connected to the suspension motor MS by penetrating the leg support.

One side of the first link 210 is connected to the suspension motor MS. For example, one side of the first link 210 may be fixedly connected to the shaft of the suspension motor MS. With this configuration, when the suspension motor MS is driven, one side of the first link 210 may rotate in conjunction with the rotation of the shaft of the suspension motor MS.

The other side of the first link 210 is rotatably connected to the third link 230. For example, a through hole may be formed in the other side of the first link 210. A shaft may be rotatably connected through the through hole. Both longitudinal ends of the shaft may be connected to the third link 230.

With this configuration, the shaft may be an axis on which the first link 210 and/or the third link 230 rotate. Therefore, the first link 210 and the third link 230 may be connected so as to be relatively rotatable.

Although not shown, the leg unit 200 may further include a gravity compensation portion. The gravity compensation portion compensates for the robot body 100 descending vertically due to gravity. In other words, the gravity compensation portion provides force to support the robot body 100.

For example, the gravity compensation portion may be a torsion spring. The gravity compensation portion may be wound to wrap around the outer surface of the first link 210. Then, one end of the gravity compensation portion may be inserted into the first link 210 and fixedly connected, and the other end of the gravity compensation portion may be inserted into the third link 230 and fixedly connected.

The gravity compensation portion applies force (rotational force) in a direction in which the angle between the first link 210 and the third link 230 increases. For example, the gravity compensation portion may have both ends of the gravity compensation portion folded in advance so as to apply a restoring force in a direction in which the angle between the first link 210 and the third link 230 increases. Accordingly, even if gravity is applied to the robot body 100 while the robot 1 is placed on the ground, the angle between the first link 210 and the third link 230 may be maintained within a predetermined angle range.

With this configuration, even if the suspension motor MS is not driven, the robot body 100 may be prevented from descending toward the ground. Therefore, there is an effect of preventing energy loss due to the suspension motor MS driving by the gravity compensation unit while maintaining the height of the robot body 100 above a predetermined distance from the ground.

The second link 220 is linked to the left and right sides inside the robot body 100. For example, the second link 220 may be linked to a leg support (not shown) provided inside the robot body housing 110. That is, the second link 220 may be linked together with the leg support (not shown) to which the first link 210 is coupled.

The second link 220 is formed in a frame shape, and one side in the longitudinal direction is coupled to a leg support member (not shown), and the other side in the longitudinal direction is coupled to the third link 230.

The second link 220 may accommodate a wire. For example, a space in which a wire may be accommodated may be formed on the inside of the second link 220. Accordingly, power from the battery 800 may be supplied to the wheel unit 300 through the wire. In addition, the wire may be prevented from being exposed to the outside.

One side of the second link 220 is rotatably coupled to the leg support member. For example, although not shown, one side of the second link 220 may be penetrated by a shaft coupled to the leg support member. A hollow space may be formed in the shaft. A wire may pass through the hollow space. With this configuration, the wires supplying power from the battery 800 to the wheel motor MW may be prevented from being exposed to the outside.

The other end of the second link 220 is rotatably coupled to the third link 230. Specifically, the other end of the second link 220 is rotatably coupled to the third link 230 through a shaft. For example, the other end of the second link 220 may be formed in a disk shape, and the shaft may be penetrated and coupled. In addition, the longitudinal ends of the shaft may be coupled to the third link 230. With this configuration, the shaft may become an axis on which the second link 220 and/or the third link 230 rotate. Accordingly, the second link 220 and the third link 230 may be connected to be relatively rotatably coupled.

The third link 230 is linked to the first link 210 and the second link 220, and is coupled to the wheel unit 300.

The third link 230 is formed in a frame shape, and the first link 210 and the second link 220 are coupled to one side in the longitudinal direction, and the wheel unit 300 is coupled to the other side in the longitudinal direction.

The third link 230 is linked to the first link 210 and the second link 220 on one side in the longitudinal direction. For example, a space may be formed on one side of the third link 230 so that the first link 210 and the second link 220 may be accommodated. That is, one side of the third link 230 may be formed in the shape of a pair of parallel frames, and the first link 210 and the second link 220 may be accommodated in the space between the pair of frames.

Here, two shafts may be arranged in parallel between a pair of frames. That is, both ends of each of the two shafts may be coupled to a pair of frames. And each of the shafts may pass through the first link 210 and the second link 220. At this time, the first link 210 may be arranged forward and lower than the second link 220. That is, the shaft passing through the first link 210 may be arranged closer to the wheel 310 than the shaft passing through the second link 220.

Therefore, the first link 210 and the second link 220 may be coupled to the third link 230 so as to be rotatable relative to each other.

The longitudinal other side of the third link 230 is coupled to the wheel unit 300. The longitudinal other side of the third link 230 may be formed to cover at least a portion of the wheel 310. For example, the longitudinal other side of the third link 230 may be formed to cover the center of rotation of the wheel 310, and a space may be formed inside to rotatably accommodate the wheel 310.

In addition, a wheel motor MW may be accommodated inside the longitudinal other side of the third link 230.

With this configuration, the wheel 310 and the wheel motor MW may be accommodated on the longitudinal side of the third link 230, and the wheel 310 may be rotatably coupled.

Meanwhile, a sensor configured to measure a distance from the ground may be provided on the longitudinal side of the third link 230. For example, the sensor may be a ToF sensor (Time of Flight sensor). With this configuration, the control unit 700 may determine whether the wheel 310 is in contact with the ground.

Meanwhile, a stopper 240 may be provided in the leg unit 200. The stopper 240 may be placed inside the robot body housing 110. The stopper 240 may be placed adjacent to the rotational coupling portion 410 of the arm 400. For example, the stopper 240 may be placed inside the inner surface of the rotational coupling portion 410 formed in a cylindrical shape.

As an example, the stopper 240 may be placed in the leg support portion (not shown). As another example, the stopper 240 may be placed in the first link 210.

The stopper 240 may be formed in a protruding shape toward the rotational coupling portion 410. For example, the stopper 240 may be formed in a protruding shape in an arch shape that has a predetermined thickness and is arranged in a concentric circle. At this time, the outer surface of the stopper 240 may be arranged toward the upper front side of the robot 1, and the inner surface of the stopper 240 may be arranged toward the lower rear side of the stopper.

The stopper 240 may be supported by contact a rotational protrusion 480 of the arm 400 to be described later. For example, the rotational protrusion 480 that is protrudingly formed on the inner surface of the rotational coupling portion 410 may be rotated together with the rotation of the arm 400, and may be brought into contact with the rotational protrusion 480 when the arm 400 is rotated to a predetermined position.

With this configuration, the stopper 240 may limit the rotation angle of the arm 400 when the arm 400 rotates.

Looking at the balance by the leg unit 200 as a whole, the first link 210 and the second link 220 are rotatably connected to the link frame (not shown) provided inside the robot body 100, and the first link 210 and the second link 220 are linked to the third link 230. That is, the robot 1 has a structure that supports the robot body 100 through a four-section link consisting of the link frame (not shown), the first link 210, the second link 220, and the third link 230.

In addition, the leg unit 200 generates a restoring force in the direction in which the gravity compensation part lifts the robot body 100. Accordingly, even when the suspension motor MS is not driven, the pair of leg units 200 may maintain the robot body 100 raised to a predetermined height from the ground.

Meanwhile, the robot 1 according to the embodiment of the present disclosure may maintain balance by driving the suspension motor MS when lifting one of the pair of wheels 310 to overcome an obstacle or lowering the height of the robot body 100 for charging, etc.

When the suspension motor MS is driven, the first link 210 rotates around the one end adjacent to the suspension motor MS as an axis, and the other end moves upward. Then, the third link 230 connected to the other end of the first link 210 moves according to the rotation of the first link 210. Then, the second link 220 is pushed by the third link 230 and rotates. As a result, one end of the third link 230 (the point of connection with the first link 210) may move backward, and the other end of the third link 230 may move upward.

With this configuration, even if the wheel 310 is moved up and down, the range of movement in the forward and backward directions of the wheel 310 may be limited. Therefore, the robot 1 may stably maintain balance.

Therefore, the robot 1 of the present disclosure may have an effect of being able to overcome obstacles of various heights by using a four-section link structure.

### Wheel unit:

Referring FIGS. 1 to 6, the wheel unit 300 of the robot 1 according to one embodiment of the present disclosure is described as follows.

The wheel unit 300 is rotatably connected to the leg unit 200 and may roll on the ground to move the robot body 100 and the leg unit 200.

The wheel unit 300 includes the wheel 310 that contacts the ground and rolls on the ground.

The wheel 310 is provided to have a predetermined radius and is provided to have a predetermined width along the axial direction. When looking at the robot 1 from the front, at least a portion of the robot body 100 and the leg unit 200 may be arranged vertically above the wheel 310.

Although not shown, the wheel 310 may include a wheel frame formed in a circular shape. The wheel frame may be formed in a cylindrical shape with one side facing the shaft of the wheel motor MW open. Through this, the weight of the wheel frame may be reduced.

However, when the wheel frame is formed in a cylindrical shape, the overall rigidity of the wheel frame may be reduced. Considering this, ribs (not shown) for reinforcing rigidity may be formed on the inner and outer surfaces of the wheel frame, respectively.

A tire is attached to the outer surface of the wheel frame. The tire may be formed in an annular shape having a diameter that may be fitted to the outer surface of the wheel frame.

A predetermined pattern of grooves may be formed on the outer surface of the tire to improve the ground contact of the tire.

In one embodiment, the tire may be formed of an elastic rubber material.

The wheel motor MW may provide driving force to the wheel 310. The wheel motor MW may receive power from the battery 800 and generate rotational force.

The wheel motor MW may be accommodated inside the other side of the third link 230. In addition, the shaft of the wheel motor MW may be coupled to the wheel 310. That is, the wheel motor MW may be an in-wheel motor.

With this configuration, when the wheel motor MW is driven, the wheel 310 may rotate and roll along the ground, and the robot 1 may move along the ground.

### Arm:

Referring to FIGS. 1 to 6, the arm 400 of the robot 1 according to one embodiment of the present disclosure is described as follows.

The arm 400 may be pivotally coupled to both sides of the robot body 100. For example, the arm 400 may mean a rotating body that is coupled to both ends of the axial direction (length direction) of the robot body 100 in the shape of an ellipsoid, and rotates around the both ends of the axial direction of the robot body 100 as one rotation axis.

Specifically, the arm 400 includes a rotational coupling portion 410, a connecting portion 420, a detachable portion 430, and a connection terminal 440.

The rotational coupling portion 410 may be rotatably coupled to both sides of the robot body 100. The rotational coupling portion 410 is provided in pairs and may be coupled to both left and right sides of the robot body 100 so as to be relatively rotatably coupled. At this time, the pair of rotational coupling portions 410 may rotate in conjunction with each other. That is, the pair of rotational coupling portions 410 rotate simultaneously with each other, and the angular size of the rotation may be the same. However, when viewed based on the robot body 100, the rotation directions of the pair of rotational coupling portions 410 may be opposite to each other. That is, when viewed based on the robot body 100, when the rotational coupling portion 410 on one side rotates clockwise, the rotational coupling portion 410 on the other side may rotate counterclockwise.

The rotational coupling portion 410 may be formed in a shape that may cover both left and right end portions of the robot body 100. For example, the rotational coupling portion 410 may be formed in a cylindrical shape having a predetermined thickness. At this time, the left and right end portions of the robot body 100 may be arranged to face each other and the rotational center of the rotational coupling portion 410.

That is, when explaining the state in which the rotational coupling portion 410 is coupled to the robot body 100, assuming that the robot body 100 is a human face, the rotational coupling portion 410 may be in a shape similar to a pair of earplugs or an earpiece of a headphone.

As shown in FIG. 4, the robot 1 according to one embodiment may have the arm motor MA placed inside the robot body housing 110. Alternatively, the arm motor MA may also be placed inside the rotational coupling portion according to embodiments.

The arm motor MA may be connected to the arm 400 to provide driving force to the arm 400. More specifically, the final output end of the shaft or gear of the arm motor MA is connected to the rotational coupling portion 410. For example, as shown in FIG. 4, the shaft of the arm motor MA may be connected to a reducer 460, and the reducer 460 may be connected to a driven gear 470.

The reducer 460 is configured of at least one gear, and transmits the rotational power applied from the arm motor MA to the driven gear 470, and may reduce the rotational speed of the driven gear 470 based on the gear ratio. Through this, the precise rotation of the arm 400 may be controlled, and the arm 400 may provide relatively large power.

The driven gear 470 may be coupled with the rotational coupling portion 410 and rotated as one. The driven gear 470 may be meshed with the output end of the reducer 460 and receive the rotational power of the arm motor MA.

With this configuration, when the arm motor MA is operated, the rotational coupling portion 410 may rotate.

The arm motors MA may be provided in two units and connected to each of the pair of rotational coupling portions 410. As another example, one arm motor MA may be provided and connected to one of the rotational coupling portions 410.

With this configuration, when the arm motors MA are operated, the pair of rotational coupling portions 410 are linked and rotated together, and the connecting portion 420 rotates together according to the rotation of the rotational coupling portion 410. That is, according to the present disclosure, the arm 400 may rotate the rotational coupling portion 410 and the connecting portion 420 as one unit with the arm shaft of the rotational coupling portion 410 as the rotational axis.

Meanwhile, a speaker 450 may be placed on the outside of the rotational coupling portion 410. That is, the speaker (450) may be placed on each of the opposite directions of the direction in which the robot body 100 is placed in the pair of rotational coupling portions 410. Accordingly, the speakers 450 may be placed at positions that cover both left and right sides of the robot body housing 110.

The speaker 450 may transmit information of the robot 1 as sound. The source of the sound transmitted by the speaker 450 may be sound data previously stored in the robot 1. For example, the previously stored sound data may be voice data of the robot 1. For example, the previously stored sound data may be a notification sound that guides the status of the robot 1. Meanwhile, the source of the sound transmitted by the speaker 450 may be sound data received through a communication unit 710.

Meanwhile, in the case of conventional robots, a pair of arms are provided on both sides of the robot body, similar to human arms, to move objects or perform specific tasks.

However, in the case where a pair of arms are provided as described above, each arm may move separately, and accordingly, the load applied to both sides of the robot maya vary. Therefore, a problem of the robot tilting to one side and falling over might occur.

In addition, when the robot falls over, the arm may attempt to stand up by touching the ground, but since the arms on both sides rotate separately to touch the ground, there is a limitation that the robot may lose its balance during the standing process and fall down again.

Meanwhile, in the case of a robot that transports an object or performs a specific task through one arm, there is a limitation that the load of the object being transported or the shock that may occur during the task may be concentrated on only one arm, which may cause damage to the arm.

To solve this, the robot 1 according to the embodiment of the present invention is configured in a form in which one arm 400 is rotatably connected to both sides of the robot body 100.

The connecting portion 420 may connect the pair of rotational coupling portions 410 to each other. The connecting portion 420 may connect the pair of rotational coupling portions 410 covering both left and right sides of the robot body 100 so that they may rotate together.

The connecting portion may connect the pair of rotational coupling portions 410 to each other and may be formed in a form that may rotate around the robot body 100. Specifically, the connecting portion 420 may be formed in a frame form in which both ends in the longitudinal direction are formed by bending and extending. At this time, the both ends of the connecting portion 420 formed by bending and extending may be arranged in parallel to each other and connected to a pair of rotational coupling portions 410. As an example, the connecting portion 420 may be formed in a '∩' shape. As another example, the connecting portion 420 may also be formed in an arch shape.

When explaining the state in which the arm 400 is connected to the robot body 100, assuming that the robot body 100 is a human face, the connecting portion 420 may have a shape similar to a headphone hair band. That is, assuming that the robot body 100 is a human face, the arm 400 may appear to have a shape similar to a headphone.

With this configuration, the pair of rotational coupling portions 410 are connected integrally with the connecting portion 420, so that the entire arm 400 may rotate together with the rotational coupling portions 410 as the center of rotation.

Meanwhile, the rotation radius of the arm 400 may be longer than the maximum length of the first link 210 and shorter than the maximum length of the leg unit 200. Specifically, the shortest distance from the rotation center of the rotational coupling portion 410 to the outer end of the connecting portion 420 may be longer than the maximum length of the first link 210 and shorter than the maximum length of the leg unit 200.

With this configuration, when the arm 400 rotates, at least a portion of the arm 400 may be positioned closer to the ground than the first link 210.

Meanwhile, the arm 400 further includes a rotation protrusion 480 formed protruding on the inner surface of the rotational coupling portion 410.

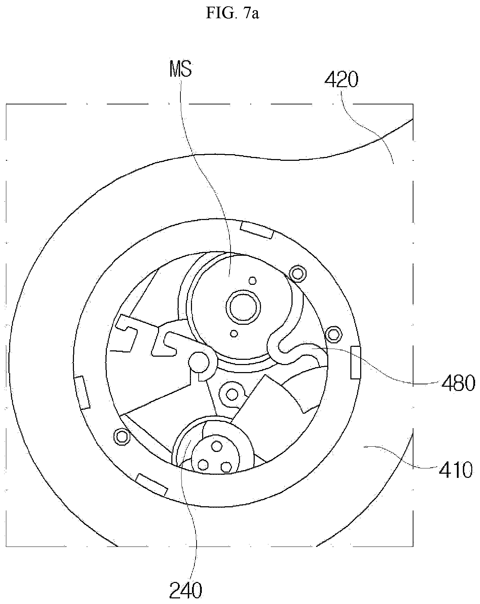

The rotation protrusion 480 may be formed protruding on the inner surface of the rotational coupling portion 410, and may be formed in a form in which the circumferential width becomes narrower from the inner surface of the rotational coupling portion 410 toward the rotation center of the rotational coupling portion 410 (see FIG. 7a).

The rotation protrusion 480 may be rotated together with the rotational coupling portion 410 and the connecting portion 420. That is, when the rotational coupling portion 410 and the connecting portion 420 are rotated, the rotation protrusion 480 is rotated by the same rotation angle as the rotational coupling portion 410 and the connecting portion 420.

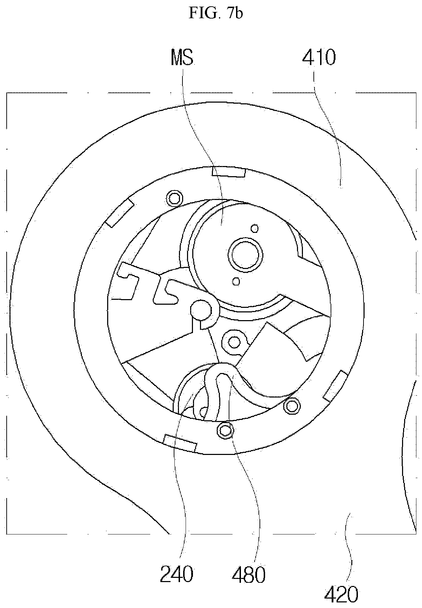

The rotation protrusion 480 may be supported by making contact with the stopper 240 along with the rotation of the arm 400. For example, when the connecting portion 420 passes the rear of the robot body 100 and is rotated closer to the ground than the first link 210, the rotation protrusion 480 may be in contact with the stopper 240 (see FIG. 7b).

With this configuration, when the arm 400 is rotated to a predetermined position, the rotation of the arm 400 may be limited while the stopper 240 and the rotation protrusion 480 are in contact and supported.

In addition, there is an effect of maintaining the posture of the arm 400 and the leg unit 200 while maintaining the state in which the stopper 240 and the rotation protrusion 480 support each other.

If a special command from the user or a preset situation does not occur, the outer end of the arm 400 may be placed further from the ground than the robot body 100. With this configuration, the user may easily carry the robot 1 by holding the arm 400. In other words, the arm 400 may perform the function of the handle that the user may grip.

In addition, if a special command from the user or a preset situation does not occur, the arm 400 may be placed further back than the robot mask 500. This is to prevent the robot mask 500 from being covered by the arm 400 when the user looks at the robot 1.

Meanwhile, if a special command from the user or a preset situation occurs, the arm 400 may implement various functions by rotating. Hereinafter, various functions implemented according to the rotation of the arm 400 will be described.

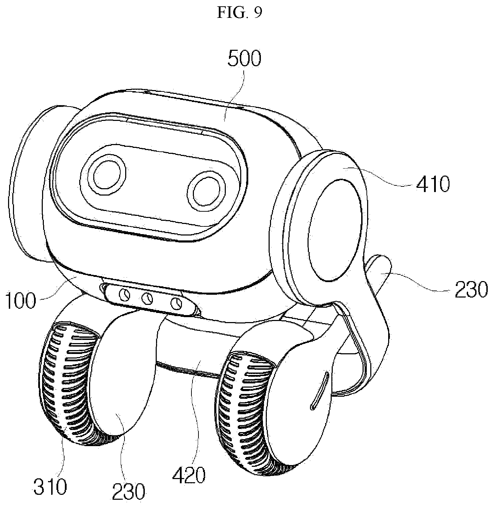

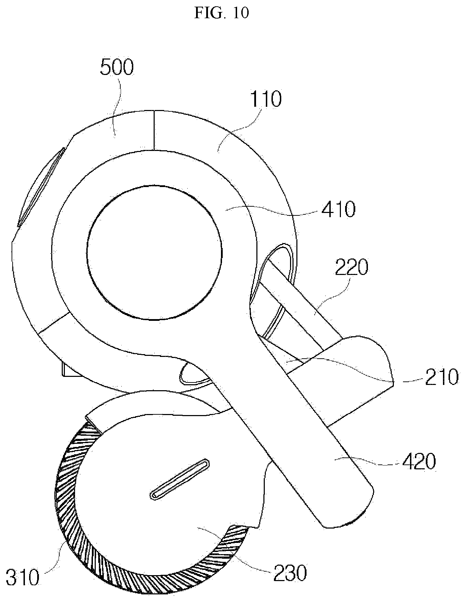

Meanwhile, FIGS. 7a to 10 are views to describe a state in which a robot according to an embodiment of the present invention is not moving but waiting.

As shown in FIGS. 7a to 10, the robot 1 of the present disclosure may rotate the arm 400 toward the ground. For example, the arm 400 may rotate from the upper side of the robot body 100 to the rear side and the lower side of the robot body 100. That is, the arm 400 may rotate backward by the operation of the arm motor MA.

The arm 400 is rotated closer to the ground than the lower end of the first link 210 and the lower end of the second link 220. And, at least a portion of the arm 400 may be arranged closer to the ground than the upper end of the third link 230.

In addition, or prior to the rotation of the arm 400, the leg unit 200 may be moved to lower the posture of the robot 1. That is, the angle between the first link 210 and the third link 230 and the angle between the second link 220 and the third link 230 may be narrowed.

Therefore, when viewed as a whole, the robot body 100 descends toward the ground, and the outer end of the arm 400 may be positioned closer to the ground than the joint portion where the first link 210, the second link 220, and the third link 230 are connected to each other. This may look similar to the robot 1 squatting down.

At this time, the rotation protrusion 480 of the arm 400 may come into contact with the stopper 240 and support each other, and the arm 400 may be restricted from further rotation.

Through this movement, the overall center of gravity of the robot 1 may be lowered. In addition, according to the backward rotation of the arm 400, the overall center of gravity of the robot 1 may be moved backward.

Therefore, even if the operation of the wheel motor MW is stopped and the wheel 310 does not rotate, the robot 1 may tilt backward and the lower end of the pair of wheels 310 and the arm 400 may come into contact with the ground.

At this time, the load of the robot body 100 presses the leg unit 200 while the rotation protrusion 480 and the stopper 240 support each other through mutual contact, thereby preventing the leg unit 200 from being spread out. In other words, when the lower end of the pair of wheels 310 and the arm 400 come into contact with the ground, the robot 1 may maintain its posture without a separate motor drive.

As a result, through the operation of the robot 1 as described above, one arm 400 and one pair of wheels 310 may come into contact with the ground, and the robot body 100 may be supported at three points.

Therefore, according to the present invention, when the robot 1 does not need to move or is waiting in place, it is possible to maintain the posture by touching the ground with the arm 400 and the wheel 310 without driving the wheel motor MW, and there is an effect of minimizing the power consumption of the robot 1.

This has an effect of significantly reducing power consumption compared to a conventional two-wheeled robot that must continuously rotate a pair of wheels in order to stop in place and wait.

Or, even if the robot is laid down or seated on the ground to reduce power waste, there was a limitation that a large amount of energy had to be applied to the wheel and/or arm momentarily to implement the motion of raising the robot again.

In comparison, according to the present invention, since the robot 1 is maintained in a state of touching the ground through the arm 400, the robot 1 may be raised again with just a simple motion of the arm 400 pushing the ground, thereby minimizing power waste.

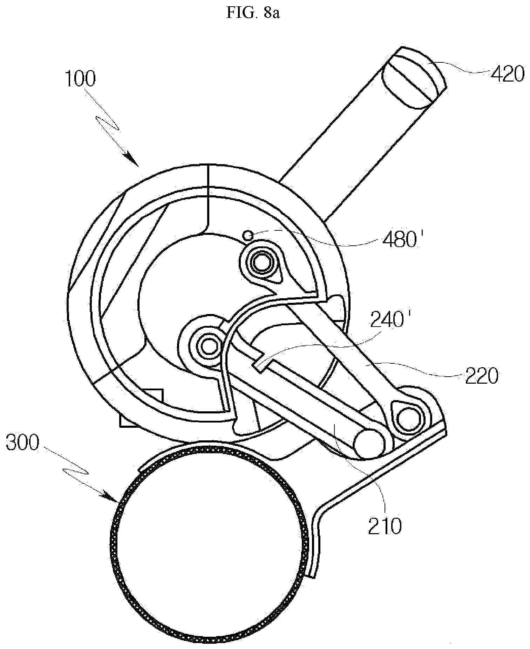

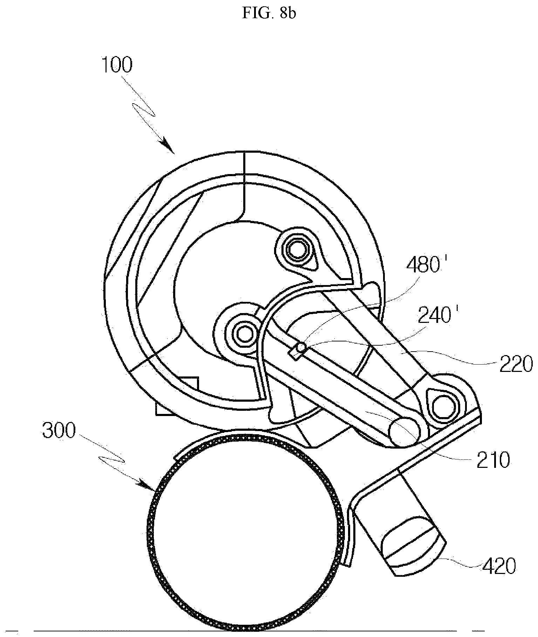

Meanwhile, FIGS. 8A and 8B show other examples of the rotation protrusion of the arm and the stopper of the leg portion.

In order to avoid repeated explanation, the configuration and effect of the robot 1 according to the embodiments of the present invention are the same as those described in the present embodiment except for the contents specifically described in the present embodiment, so they may be cited.

In this embodiment, the rotation protrusion 480' is formed protrudingly on the rotational coupling portion 410 and rotates together with the rotational coupling portion 410. At this time, the rotation protrusion 480' may be formed protruding toward the inside of the robot body 100 from the rotational coupling portion 410.

In addition, in this embodiment, the stopper 240' may be formed in a groove shape on the first link 210. Therefore, the stopper 240' may be rotated together with the rotation of the first link 210.

At this time, the path along which the stopper 240' rotates and the path along which the rotation protrusion 480' rotates may intersect at at least one point, and at this intersection, the rotation protrusion 480' may be received by the stopper 240' and may be supported by each other.

That is, when the robot 1 starts a motion of waiting without moving, the leg unit 200 rotates the first link 210 to lower the posture of the robot 1, and the stopper 240' may be rotated to the intersection. In addition, as the rotational coupling portion 410 and the connection portion 420 rotate, the rotation protrusion 480' also rotates, so that the rotation protrusion 480' is accommodated in the stopper 240'.

Therefore, the rotation protrusion 480' and the stopper 240' are interlocked and supported with each other, and the robot 1 may maintain its posture without a separate motor drive.

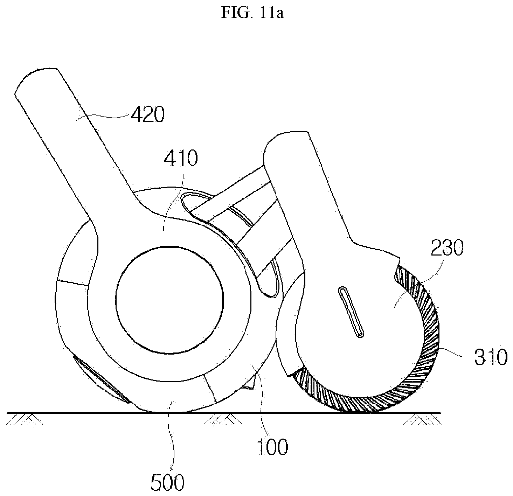

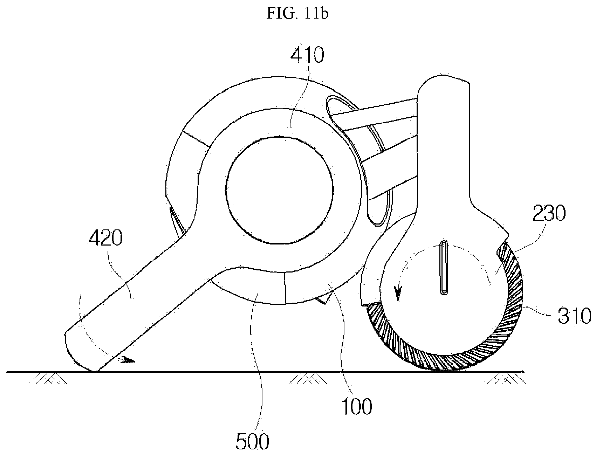

Meanwhile, FIGS. 11a and 11b are views to describe a motion that occurs when a robot according to one embodiment falls forward.

As shown in FIG. 11a and FIG. 11b, when the robot is in a state where it has fallen forward, the robot 1 may rotate the arm 400 toward the ground. For example, the arm 400 may be rotated from the upper side of the robot body 100 to the front side and the lower side of the robot body 100. That is, the arm 400 may be rotated forward by the operation of the arm motor MA.

In this process, the arm 400 may come into contact with the ground. When the robot 1 falls forward, at least a portion of the front surface of the robot body 100 and the pair of wheels 310 come into contact with the ground. Here, when the arm 400 is rotated toward the front of the robot body 100, the outer end of the arm 400 comes into contact with the ground.

Along with the rotation of the above-mentioned arm 400, the wheel 310 may be rotated in the direction in which the robot 1 moves forward. That is, the pair of wheels 310 may be rotated in the direction in which the distance from the arm 400 becomes closer.

With this motion, the arm 400 touches the ground and lifts the robot body 100 away from the ground, while the wheel 310 moves forward and digs into the lower side of the robot body 100. Therefore, the robot body 100 may be lifted to its original position.

Therefore, according to the robot 1 of the present disclosure, since one arm may touch the ground and stand up, the robot 1 may be prevented from shaking or falling over again during the standing up process, and the power consumed during the standing up process may be minimized.

In the case of a conventional two-wheeled robot falling over, a pair of wheels had to be rotated strongly for a moment and then the robot had to continue to move forward and backward to maintain balance.

To solve this problem, there is a method of using the arms provided on the left and right sides of the robot to touch the ground, but since the positions where the pair of arms contact the ground are different, the points of force that the robot uses to touch the ground to get up are different, and as a result, the robot may shake when getting up. In this case, there is a limitation that the robot may fall over again.

In contrast, according to the present disclosure, one arm 400 connected to the left and right sides of the robot body 100 has a fixed point of contact with the ground. Furthermore, since at least a portion of the outer end of the arm 400 is formed in a plane shape parallel to the ground along the left and right directions, a relatively large area may come into contact with the ground.

Therefore, during the process of lifting the robot body 100, the robot body 100 may rise stably without shaking and maintain balance.

In addition, since the robot 1 may be raised only by applying a constant rotational force to the arm 400 and the pair of wheels 310 without the need to apply a strong rotational force to the wheels momentarily, it is possible to prevent damage to the motor and reduce the overall power consumption.

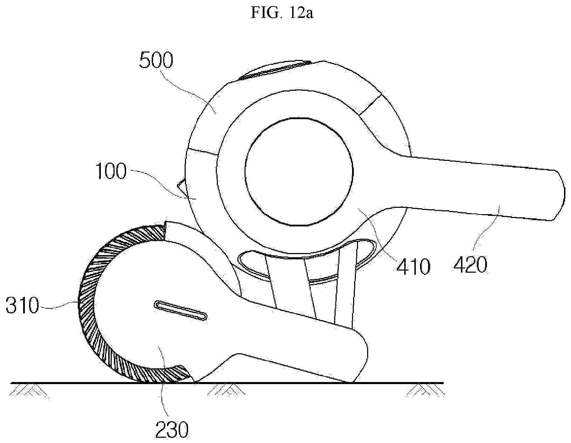

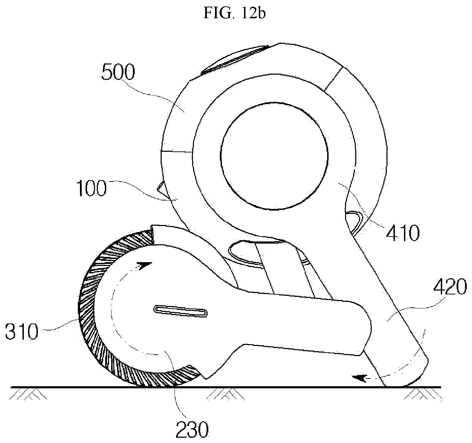

FIGS. 12a and 12b are views to describe a motion that occurs when a robot according to one embodiment falls backward.

As shown in FIG. 12a and FIG. 12b, when the robot is in a state where it has fallen backwards, the robot 1 may rotate the arm 400 toward the ground. For example, the arm 400 may rotate from the upper side of the robot body 100 to the rear side and the lower side of the rear side of the robot body 100. That is, the arm 400 may rotate backwards by the operation of the arm motor MA.

In this process, the arm 400 may come into contact with the ground. When the robot 1 falls backwards, a portion of the third link comes into contact with the ground. Here, when the arm 400 is rotated toward the rear of the robot body 100, the outer end of the arm 400 comes into contact with the ground.

Along with the rotation of the above-mentioned arm 400, the wheel 310 may be rotated in the direction in which the robot 1 moves backward. That is, the pair of wheels 310 may be rotated in the direction in which the distance from the arm 400 becomes closer.

With this motion, the arm 400 may lift the robot body 100 and the third link 230 while the wheel 310 moves backward while touching the ground. Accordingly, the robot body 100 may be lifted to its original position.

Accordingly, according to the robot 1 of the present disclosure, since one arm may touch the ground and stand up, it is possible to prevent the robot 1 from shaking or falling over again during the standing up process, and to minimize the power consumed during the standing up process.

In addition, according to the present disclosure, one arm 400 coupled to the left and right sides of the robot body 100 has a constant point of contact with the ground. Furthermore, since at least a portion of the outer end of the arm 400 is formed in a plane shape parallel to the ground along the left and right direction, a relatively large area may be in contact with the ground.

Therefore, during the process of lifting the robot body 100, the robot body 100 may rise stably without shaking and maintain balance.

In addition, since the robot 1 may be raised only by applying a constant rotational force to the arm 400 and the pair of wheels 310 without the need to apply a strong rotational force to the wheel momentarily, it is possible to prevent damage to the motor and reduce the overall power consumption.

In addition, in the case of the present invention, even when the robot 1 falls forward or backward, the rotation direction of the arm 400 and the wheel 310 may be changed so that the robot 1 may stand up.

Meanwhile, the arm 400 may be detachably coupled with the function module 900. Specifically, the arm 400 may be rotated so that the coupling portion 800 provided on the arm 400 may be brought close to the coupling structure provided on each function module 900, and the coupling structure of the coupling portion 800 and the function module 900 may be coupled to each other.

To this end, the arm 400 of the robot 1 according to the embodiment may further include a rotating body 430 and a rotating motor 440 in order to be coupled with the function module 900.

The rotating body 430 may be arranged on the connecting portion 420. Specifically, the rotating body 430 may be arranged to be rotatably with the connecting portion 420 as the rotation axis. For example, the rotating body 430 may be arranged inside the connecting portion 420. As another example, the rotating body 430 may be arranged to be connected to the connecting portion 420 from the outside of the connecting portion 420.

The rotating body 430 may be formed in a plate shape having a predetermined thickness, and the coupling portion 800 may be arranged on one side. The rotating body 430 may be formed in a cylindrical shape having a predetermined length, and the coupling portion 800 may be arranged on one side. When the rotating body 430 is formed in a cylindrical shape, the rotating body 430 may be arranged in a parallel manner along the length direction of the coupling portion 420.

At this time, the rotating body 430 may be connected to the coupling portion 800 so that the rotating body 430 and the coupling portion 800 may rotate together.

The rotating body 430 may form the outer appearance of the arm 400 together with the connecting portion 420. The longitudinal ends of the rotating body 430 may be provided with a rotating shaft coupled with the connecting portion 420. That is, the rotating shaft may be coupled to the longitudinal ends of the rotating body 430 inside the connecting portion 420.

The rotating motor 440 may provide rotating force to the rotating body 430. The rotating motor 440 may be connected to the rotating body 430 and provide rotating force to the rotating body 430. More specifically, the final output end of the shaft or gear of the rotating motor 440 is connected to the rotating body 430.

With this configuration, when the rotating motor 440 is operated, the rotating body 430 may rotate.

When the rotating body 430 rotates, the surface exposed to the outside may be changed. Specifically, the rotating body 430 may have one surface where the coupling portion 800 is arranged exposed to the outside. An opening (not shown) may be formed on one side of the connecting portion 420, and when the rotating body 430 is arranged inside the connecting portion 420, when the rotating body 430 rotates, the coupling portion 800 may be exposed to the outside space through the opening. And, when the rotating body 430 rotates, the coupling portion 800 may be hidden in the internal space of the connecting portion 1420.

With this configuration, when the coupling of the arm 400 and the function module 900 is unnecessary, the coupling portion 800 may be hidden inside the connecting portion 420.

In particular, when the robot 1 falls over, it is necessary to rotate the arm 400 so that the connecting portion 420 touches the ground, and at this time, the coupling portion 800 may be contaminated or damaged when it comes into contact with the ground.

Therefore, according to the arm 400 of this embodiment, the coupling portion 800 may be prevented from being exposed to the outside through the rotation of the rotating body 430. In addition, contamination or damage to the coupling portion 800 may be prevented.

With this configuration, the rotating body 430 may be exposed to the outside centered on the robot body 100 so that it may easily come into contact with an object approaching from the outside of the robot 1.

The coupling portion 800 may be coupled with the function module 900 while facing outside the rotation radius of the rotation coupling portion 800. The coupling portion 800 may be coupled with the function module 900. Specifically, the coupling portion 800 may be coupled with the function module 900 while facing the outer surface of the connecting portion 420. Here, the outer surface of the connecting portion 420 may mean a surface positioned opposite to the direction in which the robot body 100 is viewed from the connecting portion 420.

### Coupling portion:

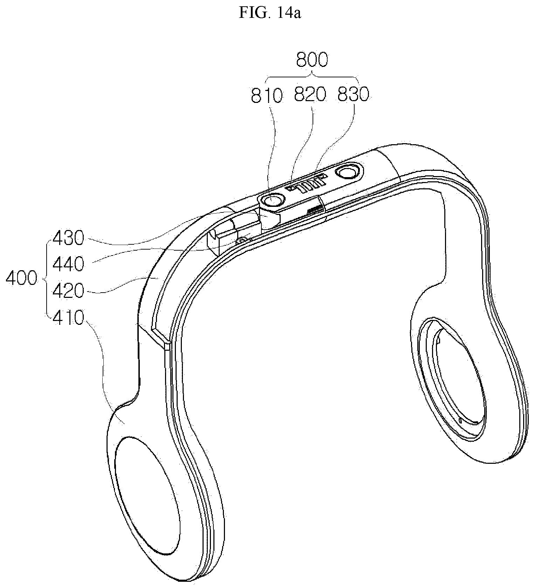

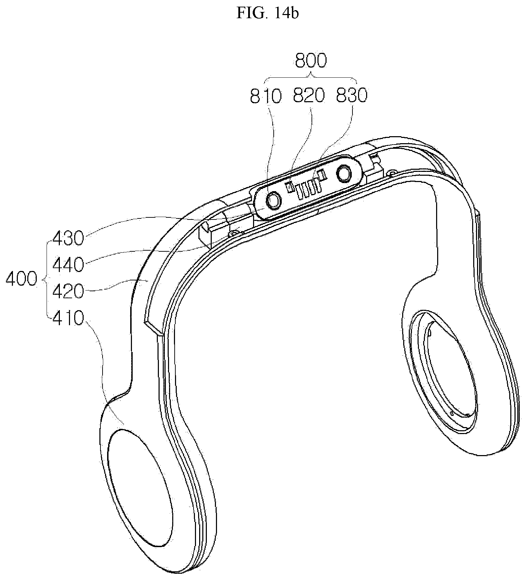

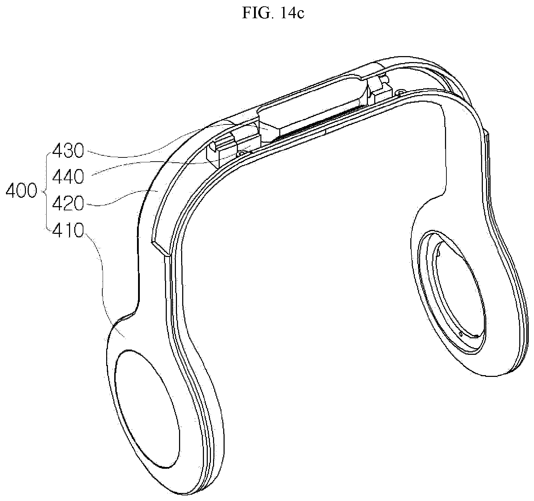

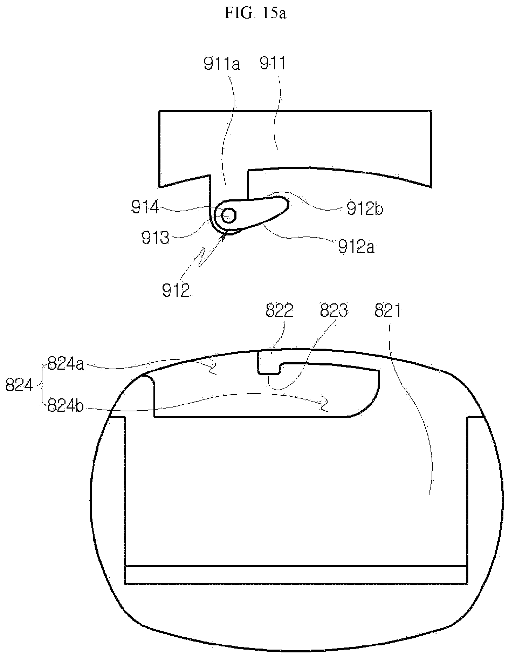

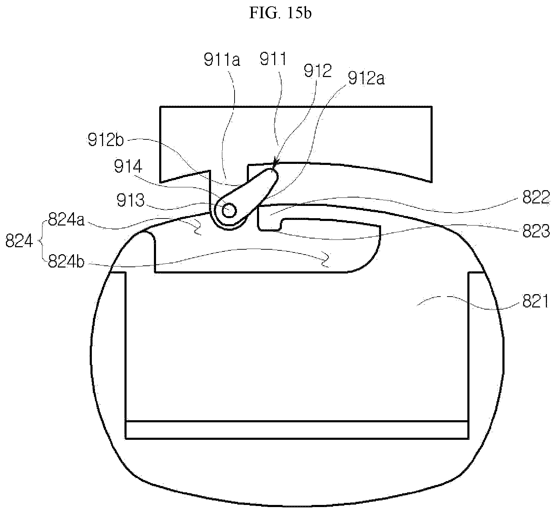

FIGS. 14a to 14c are views to describe a process of rotating a rotating body of a robot according to one embodiment. FIGS. 15a to 15c are views to describe a process of coupling a coupling portion of a robot according to one embodiment to a function module.

Hereinafter, the coupling structure and coupling process of the robot 1 and the function module 900 will be specifically described.

The coupling of the robot 1 and the function module 900 according to the embodiment may be achieved by the coupling portion 800. Specifically, the coupling portion 800 may detachably couple the function module 900 and the arm 400 of the robot 1.

The coupling portion 800 may be placed on the arm 400. Specifically, the coupling portion 800 may be placed outside the rotation radius of the arm 400. For example, the rotating body 430 may be placed on the outer surface of the connecting portion 420. Here, the outer surface of the connecting portion 420 may mean a surface placed in the opposite direction from the direction in which the connecting portion 420 faces the robot body 100.

The coupling portion 800 may be placed on the rotating body 430. The coupling portion 800 may be placed on one side of the rotating body 430 and may be exposed to the outside of the connecting portion 420.

Specifically, when the rotating body 430 is rotated by the rotating motor 440, the surface on which the coupling portion 800 is exposed to the outside may be changed. Accordingly, depending on the rotation of the rotating body 430, the coupling portion 800 may be exposed to the outside of the connecting portion 420 or hidden in the internal space of the connecting portion 420.

For example, when the coupling portion 800 is coupled with the function module 900, the rotating body 430 may be maintained in a rotated state so that the coupling portion 800 faces the outside of the rotation radius of the rotation coupling portion 800. In another example, when the coupling portion 800 is coupled with the function module 900, the rotation coupling portion 800 may be maintained in a rotated state so that the coupling portion 800 faces the outside of the rotation radius of the rotation coupling portion 800.

The coupling portion 800 of the robot 1 according to the embodiment of the present invention may include a detachable member 810, a hooking member 820, and a connection terminal 830 that may be detachably coupled with the function module 900, and correspondingly, the function module 900 may be provided with a coupling structure that may be coupled with the coupling portion 800.

At this time, the physical coupling between the robot 1 and the function module 900 may be achieved by the detachable member 810 and/or the hooking member 820, and the electrical coupling may be achieved by the connection terminal 830.

The coupling portion 800 of the robot 1 according to the embodiment of the present invention may include the detachable member 810. The detachable member 810 may be detachably coupled with the function module 900. Specifically, the detachable member 810 may be detachably coupled with the function module 900 by magnetism. That is, the detachable member 810 may be selectively coupled or separated from the function module 900.

The detachable member 810 is configured in the form of an electromagnet, and may selectively apply a magnetic force (attractive force) to the functional module 900 based on the supply of power.

For example, the detachable member 810 may be configured in the form of a circular electromagnet. With this configuration, the detachable member 810 may form a uniform magnetic field over a wide area, and may be stably coupled with the function module 900.

In addition, the detachable members 810 may be arranged in pairs with a predetermined distance between them.

At this time, a hooking member 820 and/or a connection terminal 830 may be arranged between the pair of detachable members 810. That is, the detachable members 810 may be arranged in pairs with the hooking member 820 and/or the connection member in between.

With this configuration, the pair of detachable members 810 maybe combined with the detachable portion 915 of the metal material (or electromagnet) provided in the function module 900 at an accurate position, and there is an effect of guiding the connection terminal 830 to come into contact with the corresponding terminal 916 provided in the function module 900 at an accurate position.

The coupling portion 800 of the robot 1 according to the embodiment of the present disclosure may include the hooking member 820.

As shown in FIGS. 15a to 15c, the hooking member 820 may be caught and connected to the function module 900 at a corresponding position.

Here, the 'corresponding position' may mean a position spaced apart from the robot body 100 by a predetermined distance forward or backward so that the coupling portion 800 and the function module 900 may be coupled. As an example, the 'corresponding position' may mean that the detachable portion 915 of the function module 900 is located within the area of a magnetic field formed by the magnetism of the detachable member 810.

The hooking member 820 may be caught and connected to the function module 900, and for this purpose, the hooking member 820 may include a hooking member body 821 and a hooking protrusion 822.

The hooking member body 821 may be placed in the connecting portion 420. Therefore, the hooking member body 821 may rotate integrally in conjunction with the rotation of the rotating body 430 and/or the rotation coupling portion 800.

The hooking groove 824 into which a hook 912 of the function module 900 is inserted may be formed in the hooking member 820, and the hook 912 may be inserted into the hooking groove 824 and caught. Therefore, the robot according to the embodiment has the effect that the robot 1 and the function module 900 may be hooked together only by the motion of inserting the hook 912 into the hooking groove 824.

The hooking protrusion 822 may be formed protruding from the hooking member body 821. Therefore, when the hook 912 is inserted into the hooking groove 824 to a predetermined depth or more, it may be caught and supported by the inside of the hooking protrusion 822.

Meanwhile, the hooking protrusion 822 may be formed to protrude from the connecting portion 420. That is, as long as the hooking protrusion 822 may form a space in which the hook 912 such as the hooking groove 824 may be caught, there are no restrictions on the specific arrangement and shape.

The hooking groove 824 may be formed to be recessed inward from the hooking member 820. The hooking groove 824 may be formed to be concave downward from the upper surface of the hooking member body 821. In addition, the hooking groove 824 may be formed to be concave upward from the lower surface of the hooking protrusion (822).

The hooking groove 824 may be composed of a first groove 824a and a second groove 824b. The first groove 824a may mean an entrance through which the protrusion 911a enters the inside of the hooking member 820. The second groove 824b may mean a space formed between the hooking member body 821 and the hooking protrusion 822 as a space in which the hook 912 is engaged.

Referring to FIGS. 15a to 15c, the coupling structure of the hooking member 820 of the robot 1 and the hooking-coupled function module 900 is described as follows.

Hereinafter, only the coupling structure of the hooking member 820 of the robot 1 and the hooking-coupled function module 900 is described, and a detailed description of the function module 900 will be described later.

Meanwhile, the coupling structure described below is described as an example of a case where the hooking member 820 and the function module 900 are coupled, but the coupling structure described later is not limited to a transport module 910 and may be applied to various function modules 900 including the cleaning module 920.

The transport module 910 coupled with the hooking member 820 according to the embodiment may include a module body 911, a hook 912, a shaft 913, an elastic member 914, a detachable member 915, and a corresponding terminal 916.

The module body 911 may be formed in a hexahedron shape having a predetermined volume so that various parts for the transport module 910 to perform its function may be built in.

At this time, the module body 911 may be placed at a position corresponding to the robot body 100. Here, the 'corresponding position' may mean a position spaced a predetermined distance forward or backward from the robot body 100 so that the coupling portion 800 and the transport module 910 may be coupled. For example, the 'corresponding position' may mean that the detachable member 915 of the transport module 910 is located within the area of the magnetic field formed by the magnetism of the detachable member 810.

A protrusion 911a protruding outward may be formed on the module body 911. The protrusion 911a may be inserted into the first groove 824a when the engaging member 820 and the functional module 900 are combined.

At this time, the protrusion 911a may be formed to have a width smaller than the width of the first groove 824a so that it may be easily inserted into the first groove 824a. In addition, in order to prevent shaking from occurring due to the gap between the hook 912 and the hooking protrusion 822 when the protrusion 911a is fully inserted, the maximum length of the protrusion 911a may be formed shorter than the maximum depth of the first groove 824a.

The hook 912 may be rotatably coupled to the module body 911. Specifically, the hook 912 may be rotatably coupled to the protrusion 911a of the module body 911. At this time, the hook 912 may be rotated about the shaft 913 coupled to the protrusion 911a as an axis. Therefore, when the hook 912 is pressed by the hooking protrusion 822 and rotates, the hook 912 may be inserted into the inside of the hooking groove 824 and caught.

The function module 900 may include the elastic member 914 that provides elastic force to the rotation of the hook 912 so that the hook 912 remains in a state of being caught on the hooking protrusion 822.

The elastic member 914 may be a torsion spring. The elastic member 914 may be wound to wrap around the outer surface of the shaft 913. Specifically, one end of the elastic member 914 may be fixedly coupled to the shaft 913, and the other end of the elastic member 914 may be fixedly coupled to the hook 912.

At this time, when the hook 912 is inserted into the hooking groove 824 and rotated in one direction, an elastic force may be generated in the elastic member 914. That is, the elastic member 914 may apply a restoring force (elastic force) so that the hook 912 rotates in the opposite direction of the above-mentioned one direction. Therefore, the hooking member 820 and the function module 900 may maintain a state of being coupled to the hooking groove 824.

Meanwhile, referring to FIGS. 15a to 15c, the process of coupling the hooking member 820 with the function module 900 will be described as follows.

First, when the protrusion 911a of the module body 911 is inserted into the first groove 824a, the first contact surface 912a of the hook 912 is pressed by the hooking protrusion 822, so that the hook 912 may be rotated inward (counterclockwise in FIGS. 15a to 15c). At this time, the elastic member 914 may apply elastic force to the hook 912 in the direction in which the hook 912 is rotated outward again (clockwise in FIGS. 15a to 15c).

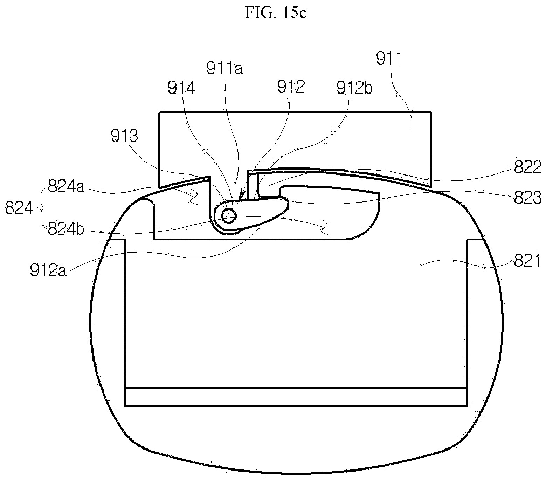

As shown in FIG. 15c, when the protrusion 911a and the hook 912 are fully inserted into the first groove 824a, the hook 912 may be rotated outward again (counterclockwise in FIG. 15c) by the elastic force of the elastic member 914, and at least a part of the hook 912 may be placed in the second groove 824b, which is an inner space of the hooking groove 824. Accordingly, when the robot 1 moves while the hook 912 is rotated outward, the second contact surface 912b of the hook 912 is supported by the hooking surface 823 on the inner side of the hooking protrusion 822, so the function module 900 may be moved together with the robot 1 at the front or rear of the robot 1.

Meanwhile, the detachable member 810 may be combined with the detachable member 915 of the metal material (or electromagnet) provided in the function module 900 at an accurate position, and may guide the hook 912 of the hooking member 820 to be inserted into an accurate position of the hooking groove 824 provided in the functional module 900. That is, as the magnetic hooking member 810 is combined with the function module 900 by magnetic attraction, the hook 912 may be inserted into and caught in the hooking groove 824 while rotating while being pressed by the hooking protrusion 822.

As a result, even when the hook 912 moves linearly in the direction in which it is pressed by the hooking member 820, it has the effect of being stably caught in the hooking groove 824.

In addition, since the detachable member 810 is coupled with the detachable member 915 by magnetism, an attractive force may be generated between the detachable member 915 and the function module 900, and due to the attractive force, the hooking member 820 has an effect of being engaged with the function module 900 without a separate driving source.

Meanwhile, when it is desired to separate the hooking member 820 from the function module 900, the coupling of the hooking member 820 may be released in the process of the rotating body 430 rotating and the hook 912 being detached from the hooking groove 824.

Specifically, when the hook 912 is caught in the hooking protrusion 822, the hook 912 may not be separated from the hooking groove 824, so that the rotating body 430 is rotated so that the hook 912 falls in the opened direction of the first groove 824a (clockwise in FIG. 15c), thereby allowing the hook 912 to be separated from the catch groove 824.

In addition, when it is desired to separate the hooking member 820 from the function module 900, the hooking of the hooking member 820 may be released in the process of the rotational coupling portion (800) rotating and the hook 912 being released from the hooking groove 824.

Specifically, when the hook 912 is caught on the hooking protrusion 822, the hook 912 may not be separated from the hooking groove 824, so that the rotational coupling portion 800 rotates so that the hook 912 falls in the opened direction of the first groove 824a (clockwise in FIG. 15c), so that the hook 912 may be separated from the hooking groove 824.

Meanwhile, the above-described hooking member 820 was described as an example of being placed in the coupling portion 800 of the robot 1, but conversely, a configuration having the same structure as the hooking member 820 may be applied to the function module 900, and a configuration having the same structure as the module body 911, hook 912, shaft 913, and elastic member 914 corresponding thereto may be applied to the hooking member 820. If a configuration having the same structure as the above-described hooking member 820 is applied to the function module 900, the hooking member 820 according to the embodiment and the corresponding function module 900 have the same structure and effect, so this may be utilized.

The connection terminal 830 of the robot 1 according to the embodiment may be electrically connected to the function module 900. Specifically, the connection terminal 830 may be electrically connected by coming into contact with the corresponding terminal 916 provided in the function module 900.

A spring (not shown) may be coupled to the connection terminal 830 and/or the corresponding terminal 916 of the function module 900. Specifically, the spring may be provided at the bottom of the connection terminal 830 and/or the corresponding terminal 916 so as to be elastically compressed when the connection terminal 830 and the corresponding terminal 916 press against each other.

The spring may apply force (elastic force) in a direction that brings the connection terminal 830 and the corresponding terminal 916 into close contact with each other. Therefore, when the coupling portion 800 is coupled with the function module 900, the connection terminal 830 and the corresponding terminal 916 are pressed against each other, and the spring is elastically compressed, so that the close contact between the connection terminal 830 and the corresponding terminal 916 may be more stably achieved.

In the present embodiment, the connection terminal 830 may be arranged such that a terminal capable of supplying power to the function module 900 and a terminal capable of transmitting and receiving signals to the function module 900 are gathered together. For example, the connection terminal 830 may be equipped with a pogo pin including two power pins and four signal pins, but the power pins and the signal pins are not limited in number. That is, the connection terminal 830 may be equipped with a pogo pin including two power pins and two signal pins. At this time, in order to prevent a short circuit accident from occurring, a pair of the power pins may be spaced apart in the length direction of the connecting portion 420 with the signal pin in between.

With this configuration, power of the robot body 100 may be supplied to the function module 900 through the connection terminal 830, or power of the function module 900 may be supplied to the robot body 100. In addition, the robot body 100 may transmit and receive an electric signal to the function module 900 through the connection terminal 830.

### Function module:

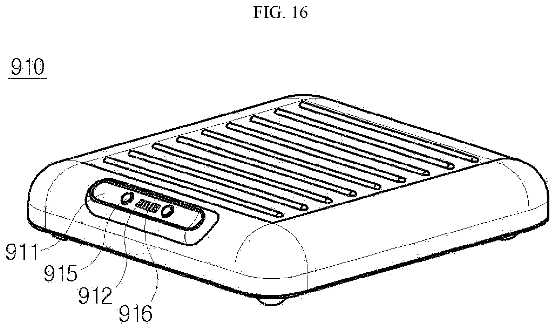

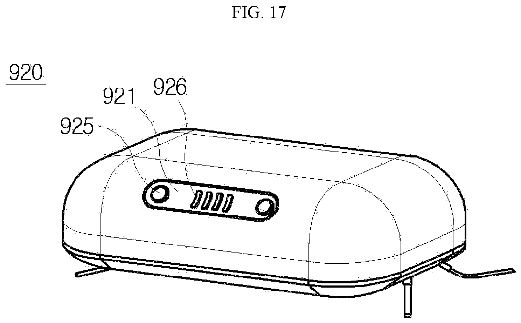

FIGS. 16 and 17 are perspective views of a function module coupled to a robot according to one embodiment.

Referring to FIG. 16 and FIG. 17, the function module 900 coupled with the robot 1 according to the embodiment of the present disclosure will be described as follows.

The robot 1 according to the embodiment may be detachably coupled with the function module 900. At this time, the function module 900 is a component that provides various functions to the robot 1 by being coupled to the robot body 100 through the arm 400.

The function module 900 may be detachably coupled with the arm 400. Specifically, the function module 900 may be detachably coupled with the arm 400 by the coupling portion 800 arranged on the arm 400.

As previously discussed, the function module 900 may be provided with a coupling structure corresponding to the detachable member 810, the hooking member 820, and the connection terminal 830 of the coupling portion 800.

For example, the function module 900 may be provided with a detachable member 915 that is detachably coupled with the detachable member 810 of the coupling portion 800 by magnetism.

In addition, the function module 900 may be provided with a hook structure that is hooked and coupled with the hooking member 820 of the coupling portion 800.

In addition, the function module 900 may be provided with a corresponding terminal 916 corresponding to the connection terminal 830 of the coupling portion 800. The corresponding terminal 916 may be supplied with power from the robot body 100 by contacting the connection terminal 830 and may transmit and receive electric signals with the robot body 100.

Although not shown, the function module 900 may include a lamp. The lamp may indicate the position of the function module 900 through light emission. For example, the lamp may be an infrared (IR) LED (light emitting diode). With this configuration, the IR sensor 620 placed on the robot body 100 may detect the position of the function module 900, and the robot body 100 may drive toward the function module 900.

The function module 900 may include various configurations depending on the function.

When each different function module 900 is provided, the user may add or change the service provided by the robot 1 according to the present disclosure by replacing the function module 900 with the arm 400 as needed.

As an example, as shown in FIG. 16, the function module 900 may be a transport module 910. The transport module 910 may include a support plate capable of supporting an object and a transport wheel coupled to the lower side of the support plate and rolling on the ground.

The support plate is provided so that an object may be placed on the upper side. For example, the support plate may be formed in a block shape having a predetermined thickness, and a space may be provided on the upper side to place an object.

In addition, an anti-slip pad may be placed on the upper side of the support plate to prevent the placed object from slipping. The anti-slip pad may be formed of a material with high friction such as PU (polyurethane) with excellent anti-slip properties and artificial leather as the main ingredient, but the embodiments are not limited thereto.

The anti-slip pad may further maximize friction by arranging multiple protrusions formed of a material with high friction such as PU (polyurethane) with excellent anti-slip properties and artificial leather as the main ingredient.

The transport wheel is coupled to the lower side of the support plate and may roll on the ground.

Meanwhile, according to one embodiment, the transport module 910 may further include a motor (not shown) that provides power to the transport wheel. When the motor (not shown) of the transport module 910 is operated, it has the effect of moving a heavier object.

Meanwhile, in this embodiment, the transport module 910 may be coupled to the rear of the robot body 100. When the transport module 910 is coupled to the rear of the robot body 100, the robot body 100 may be positioned in front of the transport module 910 to guide the moving direction of the transport module 910. That is, the transport module 910 may be moved along the moving direction of the robot body 100. This may make it appear as if the robot body 100 is pulling the transport module 910 through the arm 400 when viewed by a user.

In contrast, in this embodiment, the transport module 910 may be coupled to the front of the robot body 100. When the transport module 910 is coupled to the front of the robot body 100, the robot body 100 is positioned behind the transport module 910 and may push and move the transport module 910.

As another example, as shown in FIG. 17, the function module 900 may be a cleaning module 920.

The cleaning module 920 may include a module body 921, a suction nozzle, and a dust bin. With this configuration, when the function module 900 is coupled to the arm 400, the robot 1 may perform dry cleaning.

The cleaning module 920 may be detachably coupled to the arm 400.

For example, the detachable member 925 that is detachably coupled to the detachable member 810 by magnetism may be arranged in the module body 921 of the cleaning module 920. In addition, the corresponding terminal 926 that is electrically connected to the connection terminal 830 may be arranged in the module body 921 of the cleaning module 920.

In addition, the module body 921 may be formed in a hexahedral shape having a predetermined volume, and a path that may suck up dust may be formed inside.

A suction nozzle (not shown) that may suck up dust may be provided on the bottom surface of the module body 921. In addition, a dust bin configured to store the sucked-up dust may be arranged inside the module body 921. A motor (not shown) that provides air suction power may be provided inside the module body 921. At this time, a wheel may be provided on the bottom surface of the module body 921. In addition, an agitator may be provided on the bottom surface of the module body 921. In addition, a side brush may be further provided on the bottom surface of the module body 921. In addition, a motor providing driving force to the agitator and/or wheel may be further provided inside the module body 921.

Meanwhile, in the present embodiment, the cleaning module 920 may be coupled to the front of the robot body 100. When the cleaning module 920 is coupled to the front of the robot body 100, the robot body 100 may be positioned behind the cleaning module 920 and may move together with the cleaning module 920. The cleaning module 920 may change the driving direction based on the movement of the robot body 100. This may make it appear as if the robot body 100 is pushing and cleaning the cleaning module 920 through the arm 400 when viewed by the user.

In contrast, in the present embodiment, the cleaning module 920 may be coupled to the rear of the robot body 100. When the cleaning module 920 is coupled to the rear of the robot body 100, the robot body 100 may be positioned in front of the cleaning module 920 to guide the moving direction of the cleaning module 920. That is, the cleaning module 920 may be moved along the moving direction of the robot body 100. This may make it appear as if the robot body 100 is pulling and moving the cleaning module 920 through the arm 400 when viewed by the user.

Although not shown, as another example, the function module 900 may include a pair of mops that rotate around a rotation axis and a water tank that stores water supplied to the mop. With this configuration, when the function module 900 is coupled to the robot body 100, the robot 1 may perform wet cleaning.

Although not shown, as another example, the function module 900 may include an arm and a gripper. With this configuration, when the function module 900 is coupled to the robot body 100, the gripper may pick up a mobile phone or a large object and transport it to another location.

### Robot mask:

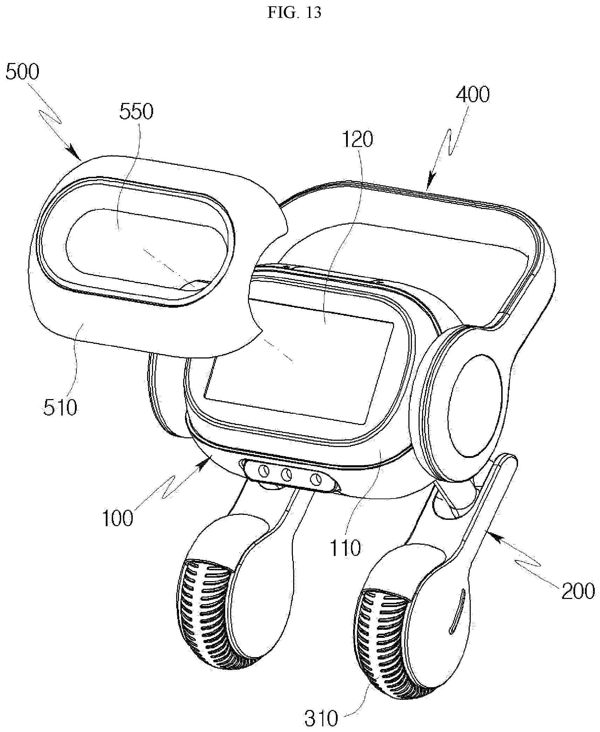

FIG. 13 shows a view to describe the relationship between the robot mask and the robot body in the robot according to one embodiment.

The robot 1 according to this embodiment may further include the robot mask 500.

The robot mask 500 is detachably coupled with the robot body 100 and may cover the display 120. The robot mask 500 may be coupled with the robot body 100 to form the exterior of the robot 1.

Meanwhile, the robot mask 500 according to one embodiment of, when coupled with the robot body 100, may include a window 550 that exposes an image displayed on the display 120 to the outside.

The window 550 may be arranged in the mask body 510. Specifically, the window 550 may be arranged to penetrate the mask body 510 and may be arranged at a position facing the display (120) when the robot mask 500 is coupled to the robot body 100.

The window 550 may be formed of a material that allows light to pass through. For example, the window 550 may be formed of a transparent material.

Meanwhile, when the robot mask 500 is combined with the robot body 100, the display 120 may display a face and facial expressions.

The robot 1 may display facial shapes such as eyes, nose, and mouth on the display 120 to make the user feel that the robot is expressing emotions.

In this way, the robot 1 may provide a pet robot service that displays emotions to the user and communicates with the user, and has the effect of providing emotional stability to the user.

The robot 1 may display emotions visually by displaying facial expressions on the display 120 as described above, and may also display emotions through voice output from the speaker 450.

For example, it may output sounds such as smiling and surprised sounds in response to the expressions displayed on the display 120.

In addition, the robot 1 may display emotions visually by displaying facial expressions on the display 120 as described above, and may also display emotions through rotation of the arm 400.

For example, it may display emotions by shaking the arm 400 while displaying a smiling expression on the display 120.

### Control configuration:

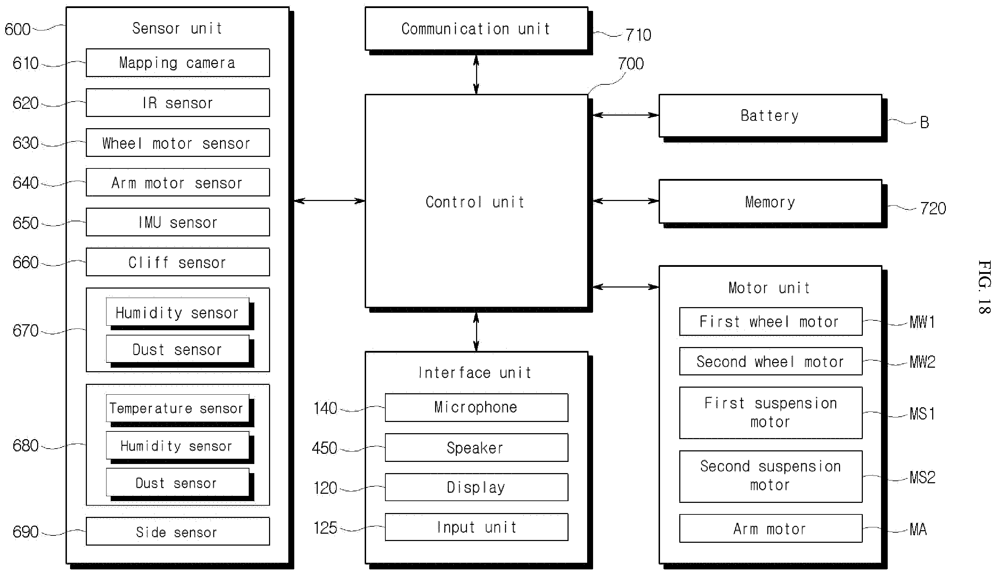

FIG. 18 is a block view to describe the control configuration of the robot according to one embodiment.

Referring to FIG. 18, the robot 1 according to one embodiment may include a sensor unit 600, a control unit 700, a communication unit 710, a memory 720, a battery 800, a motor unit, and an interface unit.

The components shown in the block diagram of FIG. 18 are not essential for implementing the robot 1, so the robot 1 described in this disclosure may have more or fewer components than the components listed above.

First, the control unit 700 may control the overall operation of the robot 1. The control unit 700 may control the robot 1 to perform various functions according to the setting information stored in the memory 720 described below.

The control unit 700 may be placed in the robot body 100. More specifically, the control unit 700 may be mounted and provided on a PCB placed inside the body housing 110.

The control unit 700 may include all types of devices capable of processing data, such as a processor. Here, the 'processor' may mean a data processing device built into hardware, for example, having a physically structured circuit to perform a function expressed by a code or command included in a program. As an example of a data processing device built into hardware, a microprocessor, a central processing unit (CPU), a processor core, a multiprocessor, an application-specific integrated circuit (ASIC), a field programmable gate array (FPGA), and the like may be included, but the scope of the present disclosure is not limited thereto.

The control unit 700 may receive information about the external environment of the robot 1 from at least one of the components of the sensor unit 600 described below. At this time, the information about the external environment may be, for example, information about the temperature, humidity, and amount of dust in the room where the robot 1 is driving. Or, for example, it may be cliff information. Or, for example, it may be indoor map information. Of course, the information about the external environment is not limited to the examples described above.

The control unit 700 may receive information about the current state of the robot 1 from at least one of the components of the sensor unit 600 described below. At this time, the current state may be, for example, information about the inclination of the robot body 100. Or, for example, information about the separation state between the wheel 310 and the ground. Or, for example, it may be position information of the wheel motor (MW). Or, for example, it may be position information of the suspension motor (MS). Of course, information about the current status of the robot 1 is not limited to the examples described above.

The control unit 700 may transmit a drive control command to at least one of the components of the motor unit to be described later. The control unit 700 may control the rotation of at least one of the wheel motor MW, the suspension motor MS, and the arm motor MA to implement one of the operations of driving, maintaining a posture, and changing a posture of the robot 1.

The control unit 700 may receive a user's command through at least one of the components of the interface unit to be described later. For example, the command may be a command to turn the robot 1 on/off. Or, for example, the command may be a command to manually control various functions of the robot 1.

The control unit 700 may output information related to the robot 1 through at least one of the components of the interface unit to be described later. For example, the output information may be visual information. Or, for example, the output information may be auditory information.

The motor unit includes at least one motor and may provide driving force to a configuration connected to each motor.

The motor unit may include a wheel motor MW that provides driving force to the left and right wheels 310. More specifically, the motor unit may include a first wheel motor MW1 that transmits driving force to the wheel 310 arranged on one side of the left and right directions and a second wheel motor MW2 that transmits driving force to the wheel 310 arranged on the other side of the left and right directions.

The wheel motors MW may be respectively arranged in the wheel unit 300. More specifically, the wheel motors MW may be accommodated inside the third link 230.

The wheel motor MW is connected to the wheel 310. More specifically, the final output end of the shaft or gear of the first wheel motor MW1 is connected to the wheel 310 arranged on one side in the left and right directions. The final output end of the shaft or gear of the second wheel motor MW2 is connected to the wheel 310 arranged on the other side in the left and right directions. Each of the left and right wheel motors MW is driven and rotated according to the control command of the control unit 700, and the robot 1 travels along the ground due to the rotation of the wheel 310 according to the rotation of the wheel motor MW.

The motor unit may include a suspension motor MS that provides driving force to the left and right leg units 200. More specifically, the motor unit may include a first suspension motor MS1 that transmits driving force to the leg unit 200 positioned on one side in the left and right directions, and a second suspension motor MS2 that transmits driving force to the leg unit 200 positioned on the other side in the left and right directions.

The suspension motor MS may be positioned in the robot body 100. More specifically, the suspension motor MS may be accommodated in the interior of the body housing 110, respectively.

The suspension motor MS is connected to the first link 210. More specifically, the final output end of the shaft or gear of the first suspension motor MS1 is connected to the first link 210 arranged on one side in the left and right directions. The final output end of the shaft or gear of the second suspension motor MS2 is connected to the first link 210 arranged on the other side in the left and right directions. Each of the suspension motors MS on the left and right sides is driven and rotated according to the control command of the control unit 700, and the first link 210 rotates according to the rotation of the suspension motor MS, and the third link 230 connected to the first link 210 rotates, and as a result, the angle between the first link 210 and the third link 230 may be changed.

Through this, the robot 1 may perform an operation of lifting or lowering the wheel 310, and may maintain a horizontal posture when climbing an obstacle or driving on a curved surface. Alternatively, the robot body 100 may move downward or upward.

The motor section may include an arm motor MA that provides rotational force to the arm 400.

The arm motor (MA) may be placed in the robot body (100). More specifically, at least one arm motor (MA) may be accommodated inside the body housing (110).

The arm motor MA is driven and rotates according to the control command of the control unit 700, and the rotational coupling portion 410 rotates according to the rotation of the arm motor MA, and the connecting portion 420 formed integrally with the rotational coupling portion 410 rotates, resulting in pivot movement of the arm 400 relative to the robot body 100.

Through this, the robot 1 may perform an operation of rotating the arm 400, and the arm 400 may be rotated to be coupled with the function module. Alternatively, the arm 400 may be made to touch the ground through the rotation of the arm 400.

The sensor unit 600 includes at least one sensor, and each sensor may measure or detect information about the external environment of the robot 1 and/or information about the current state of the robot 1.

The sensor unit 600 may include a mapping camera 610.

The mapping camera 610 is provided to map the indoor space in which the robot 1 runs.

For this purpose, the mapping camera 610 may be placed in front of the robot body 100. More specifically, the mapping camera 610 may be placed in the remaining space of the body housing 110.

The mapping camera 610 may capture an indoor scene while driving to perform SLAM (Simultaneous Localization and Mapping). The control unit 700 may implement SLAM based on information about the surrounding environment captured by the mapping camera 610 and information about the current location of the robot 1.

Meanwhile, the method by which the robot 1 according to the embodiment of the present disclosure implements SLAM may be implemented only with the mapping camera 610, but the embodiments are not limited thereto. For example, the robot 1 may implement SLAM by further utilizing an additionally equipped sensor. The additional sensor may be, for example, an LDS (Laser Distance Sensor).

The sensor unit 600 may include an IR sensor 620 for infrared detection.

The IR sensor 620 may be an IR camera that detects infrared light.

The IR sensor 620 may be placed on the robot body 100. More specifically, the IR sensor 620 may be placed on the front of the body housing 110. The IR sensor 620 may be placed left and right of the first camera 610a.

The IR sensor 620 may detect infrared light emitted by an IR LED equipped in a specific module and approach the module. For example, the module may be a charging station for charging the robot 1. For example, the module may be the functional module 900 that is detachably provided on the arm 400.

The control unit 700 may control the IR sensor 620 to start detecting the IR LED when the charging status of the robot (1) is below a preset level. The control unit 700 may control the IR sensor 620 to start detecting the IR LED when a command to find a specific module is received from the user.

The sensor unit 600 may include a wheel motor sensor 630.

The wheel motor sensor 630 may measure the position of the wheel motor MW. For example, the wheel motor sensor 630 may be an encoder. As is well known, an encoder may detect the position of a motor and also detect the rotation speed of the motor.

The wheel motor sensors 630 may be respectively placed on the left and right wheel motors MW. More specifically, the wheel motor sensor 630 may be connected to the shaft or the final output end of the gear of the wheel motor MW and may be accommodated inside the third link 230 together with the wheel motor MW.

The sensor unit 600 may include an arm motor sensor 640.

The arm motor sensor 640 may measure the position of the arm motor MA. For example, the arm motor sensor 640 may be an encoder. As is well known, an encoder may detect the position of a motor and also detect the rotation speed of the motor.

The arm motor sensor 640 may be placed on the arm motor MA. More specifically, the arm motor sensor 640 may be connected to the final output end of the shaft or gear of the arm motor MA and may be accommodated inside the robot body housing 110 or the rotational coupling portion 410 together with the arm motor MA.

The sensor unit 600 may include an IMU sensor 650.

The IMU sensor 650 may measure the tilt angle of the robot body 100.

As is well known, the IMU (Inertial Measurement Unit) sensor 650 is a sensor that incorporates a three-axis acceleration sensor, a three-axis gyro sensor, and a geomagnetic sensor, and is also referred to as an inertial measurement sensor.

The three-axis acceleration sensor is a sensor that detects the gravitational acceleration of an object in a stationary state. Since the gravitational acceleration varies depending on the angle at which the object is tilted, the tilt angle may be obtained by measuring the gravitational acceleration. However, there is a disadvantage in that the correct value cannot be obtained in a moving acceleration state, not a stationary state.

A three-axis gyro sensor is a sensor that measures angular velocity. When the angular velocity is integrated over the entire time, the inclination angle is obtained. However, the angular velocity measured by the gyro sensor has continuous errors due to noise, etc., and due to these errors, errors in the integral value accumulate and occur over time.

As a result, when a long time passes in a stationary standby state, the robot 1 may accurately measure the inclination by the acceleration sensor, but errors occur by the gyro sensor. When driving, the robot 1 may accurately measure the inclination value by the gyro sensor, but may not obtain the correct value by the acceleration sensor.

Using an IMU sensor may complement the shortcomings of the acceleration sensor and gyro sensor described above.

This present disclosure describes an embodiment in which an IMU sensor is provided.

The IMU sensor may be placed on the robot body 100. More specifically, the IMU sensor may be placed adjacent to the control unit 700. The IMU sensor may be mounted and provided on a PCB inside the robot body 100. In order to improve the measurement accuracy of the tilt angle and direction, it is preferable that the IMU sensor be placed close to the central area of the robot body 100.

The IMU sensor may measure at least one of the three-axis acceleration, three-axis angular velocity, and three-axis geomagnetic data of the robot body 100 and transmit the data to the control unit 700.

The control unit 700 may calculate the tilted direction and tilted angle of the robot body 100 using at least one of the acceleration, angular velocity, and geomagnetic data received from the IMU sensor. Based on this, the control unit 700 may perform horizontal posture maintenance control of the robot body 100, which will be described later.

The sensor unit 600 may include a cliff sensor 660 for detecting a cliff.

The cliff sensor 660 may be configured to detect the distance from the front ground on which the robot 1 is traveling. The cliff sensor 660 may be formed in various ways within a range that may detect the relative distance between the point where the cliff sensor 660 is formed and the ground.

For example, the cliff sensor 660 may be formed by including a light-emitting part that irradiates light and a light-receiving part where reflected light is incident. The cliff sensor 660 may be formed by an infrared sensor.

The cliff sensor 660 may be placed on the robot body 100. More specifically, the cliff sensor 660 may be placed on the inside of the robot body 100. The cliff sensor 660 may irradiate light toward the front floor surface of the robot 1. The cliff sensor 660 may detect in advance whether a cliff exists in the forward direction of the robot 1.

The light-emitting portion of the cliff sensor 660 may irradiate light obliquely toward the front floor surface. The light-receiving portion of the cliff sensor 660 may receive light reflected from the floor surface and incident thereon. The distance between the front ground and the cliff sensor 660 may be measured based on the difference between the irradiation time and the reception time of the light.

If the distance measured by the cliff sensor 660 exceeds a preset value or a preset range, it may be a case where the front ground suddenly lowers. A cliff may be detected using this principle.

The control unit 700 may control the wheel motor MW so that the robot 1 may drive to avoid the detected cliff when a cliff is detected in front. At this time, the control of the wheel motor MW may be a stop control. Alternatively, the control of the wheel motor MW may be a rotation direction switching control.

The sensor unit 600 may include a contact detection sensor 670.

The contact detection sensor 670 may detect whether the wheel 310 has contacted the ground.

The contact detection sensor 670 may include a TOF sensor that measures the distance between the wheel 310 of the robot 1 and the ground. The TOF sensor may be a 3D camera to which TOF (Time of Flight) technology is applied. TOF technology, as is well known, is a technology that measures the distance to an object based on the round-trip flight time for light irradiated toward the object to be reflected and returned.

The TOF sensor may be placed on the wheel unit 300. For example, the contact detection sensor 670 may be placed on each of the left and right third links 230. It may be determined whether the wheel 310 is in contact with the ground based on the distance from the ground measured by the TOF sensor. If the distance measured by the TOF sensor is less than a preset distance (or less than a lower limit of the preset distance range), the wheel 310 is in contact with the ground. If the distance measured by the TOF sensor is greater than or equal to a preset distance (or greater than or equal to an upper limit of the preset distance range), the wheel 310 is separated from the ground.

The contact detection sensor 670 may include a load cell that measures the magnitude of force applied to a part of the robot 1.

As is well known, when force is applied to the load cell, the resistance value of the strain gauge provided on the surface changes. At this time, the magnitude of the force applied to the load cell may be measured through the change in the resistance value.

The load cell may be placed in the leg unit 200. Preferably, the load cells may be placed in each of the left and right third links 230. When the wheel 310 is in contact with the ground, the third link 230 is deformed by a vertical force applied from the ground. The measured value of the load cell appears as a different value from the initial value depending on the deformation of the third link 230. Through this, it may be determined whether the wheel 310 is in contact with the ground.

The sensor unit 600 may include an environmental sensor 680.

The environmental sensor 680 may be configured to measure various environmental conditions outside the robot 1, i.e., the inside of the house where the robot 1 is driving. The environmental sensor 680 may include at least one of a temperature sensor, a humidity sensor, and a dust sensor.

The environmental sensor 680 may be placed in the robot body 100. More specifically, the environmental sensor 680 may be placed at the rear of the robot body 100. As a possible embodiment, information measured by the environmental sensor 680 may be visually displayed on the display 120.

The sensor unit 600 may include a side sensor 690.

The side sensor 690 may measure the distance to an obstacle, including a wall, etc.

The side sensor 690 may be configured to detect the distance from the wall surface on the side where the robot 1 is running. The side sensor 690 may be configured in various ways within a range that may detect the relative distance between the point where the side sensor 690 is placed and the obstacle.

For example, the side sensor 690 may be configured to include a light-emitting unit that irradiates light and a light-receiving unit where reflected light is incident. The side sensor 690 may be configured as an infrared sensor.

The side sensor 690 may be placed on both sides of the robot 1. For example, the side sensor 690 may be placed on the outer surface of the third link 230 of the leg unit 200.

The interface unit includes at least one configuration for interaction between a user and the robot 1, and each configuration may be equipped to input a command from a user and/or output information to the user.

The interface section may include a microphone 140.

The microphone 140 is a configuration that recognizes the user's voice, and may be provided in multiple numbers. The microphone 140 may be arranged in multiple numbers in the robot body housing 110. For example, four microphones 140 may be arranged on the upper side of the robot body housing 110.

The voice signal received by the microphone 140 may be used to track the user's location. At this time, a known sound source tracking algorithm may be applied. For example, the sound source tracking algorithm may be a three-point measurement method (triangulation method) using the time difference between multiple microphones 140 receiving the voice signal. The principle is that the location of the voice source is calculated using the location of each microphone 140 and the speed of the sound wave.

Meanwhile, if the microphone 140 and the first camera 610a described above cooperate with each other, the robot 1 may be implemented to find the user's location even when the user calls the robot 1 from a far-away place.

The interface unit may include a speaker 450.

The speaker 450 may be placed on the arm 400. For example, the speaker 450 may be placed on the rotational coupling portion 410 of the arm 400. Speakers 450 may be placed at positions covering both left and right sides of the robot body housing 110.

The speaker 450 may transmit information of the robot 1 as sound. The source of the sound transmitted by the speaker 450 may be sound data previously stored in the robot 1. For example, the previously stored sound data may be voice data of the robot 1. For example, the previously stored sound data may be a notification sound that guides the status of the robot 1. Meanwhile, the source of the sound transmitted by the speaker 450 may be sound data received through the communication unit 710.

The interface unit may include a display 120 and an input unit 125.

The display 120 may include a display arranged in one or more modules. The display 120 may be arranged on the front upper side of the robot body 100.

The display 120 may be formed of any one of a light emitting diode (LED), a liquid crystal display (LCD), a plasma display panel, and an organic light emitting diode (OLED).

The display 120 may display information such as operating time information of the robot 1, battery 800 power information, etc.

The display 120 may display the facial expression of the robot 1. Alternatively, the display 120 may display the pupils of the robot 1. The current state of the robot 1 may be personified and expressed as an emotion through the shape of the face or the shape of the pupils displayed on the display 120. For example, when the user goes out and returns home, the display 120 may display a smiling facial expression or smiling eye shape. This provides an effect where the user feels a sense of communication with the robot 1.

The input unit 125 may be configured to receive a control command for controlling the robot 1 from the user. For example, the control command may be a command for changing various settings of the robot 1. For example, the settings may be voice volume, display brightness, power saving mode settings, etc.

The input unit 125 may be placed on the display 120.

The input unit 125 generates key input data that the user inputs to control the operation of the robot 1. For this purpose, the input unit 125 may be composed of a key pad, a dome switch, a touch pad (static/electrostatic), etc. In particular, when the touch pad forms a mutual layer structure with the first display, it may be called a touch screen.

The communication unit 710 may be provided for signal transmission between each component within the robot 1. The communication unit 710 may support, for example, CAN (Controller Area Network) communication. The signal may be, for example, a control command transmitted from the control unit 700 to another component.

The communication unit 710 may support wireless communication with other devices existing outside the robot 1. A short-range communication module or a long-range communication module may be provided as a wireless communication module for supporting wireless communication.

Short-range communication may be, for example, Bluetooth communication, NFC (Near Field Communication), etc.

Long-distance communication includes, for example, Wireless LAN (WLAN), Digital Living Network Alliance (DLNA), Wireless Broadband (Wibro), World Interoperability for Microwave Access (Wimax), Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, and Radio Frequency (RF). LoRa (Long Range), etc.

The memory 720 is a configuration in which various data for driving and operating the robot 1 are stored.

The memory 720 may store an application program for autonomous driving of the robot 1 and various related data. The memory 720 may also store each data sensed by the sensor unit 600, and may store setting information for various settings selected or input by the user.

The memory 720 may include a magnetic storage media or a flash storage media, but the scope of the present invention is not limited thereto. Such memory 720 may include internal memory and/or external memory, and may include volatile memory such as DRAM, SRAM, or SDRAM, nonvolatile memory such as OTPROM (one time programmable ROM), PROM, EPROM, EEPROM, mask ROM, flash ROM, NAND flash memory, or NOR flash memory, flash drives such as SSD, CF (compact flash) card, SD card, Micro-SD card, Mini-SD card, Xd card, or memory stick, or storage devices such as HDD.

The memory 720 may be included in the control unit 700 or may be provided as a separate component.

The battery 800 is configured to supply power to other components forming the robot 1.

The battery B may be placed in the robot body 100. More specifically, the battery B may be accommodated inside the robot body housing 110. Although not shown, the battery B may be placed behind the suspension motor MS.

The battery B may be charged by an external power source, and for this purpose, a charging terminal 130 for charging the battery B may be provided on one side of the robot body 100. As in the embodiment of the present invention, the charging terminal 130 may be placed at the bottom of the robot body 100. In this way, the robot 1 may be easily coupled with the charging station by approaching the charging station and descending, thereby placing the charging terminal 130 on the corresponding terminal of the charging station from above.

### Basic driving posture of the robot:

The robot 1 may drive on the ground in a preset basic posture as illustrated in FIG. 1. The basic posture may refer to the posture of the robot 1 in a state where a specific event does not occur. The specific event may be caused by a change in the external environment in which the robot 1 drives, a user's control command, or satisfaction/dissatisfaction of a condition preset for the robot 1.

In the basic posture, the connecting portion 420 of the arm 400 may be placed on the upper side of the robot body 100. More specifically, in the basic posture, the connecting portion 420 may be placed farther from the ground than the robot body 100. With this configuration, the user may easily lift the robot 1 by grasping the connecting portion 420. This may help the user easily transport the robot 1 and quickly move the robot 1 to another space. In other words, the arm 400 may be provided as a handle to the user.

In the basic posture, the connection portion 420 of the arm 400 may be placed at the rear of the robot body 100. Preferably, in the basic posture, the connection portion 420 may be placed at the rear of the robot mask 500. As a result, when the user looks at the robot 1, the robot mask 500 may be covered by the arm 400, thereby preventing the visibility of the display from being reduced.

In the basic posture, balance control may be performed so that the robot 1 does not fall forward or backward. At this time, balance control means control to rotate the wheel 310 forward or backward by rotating the wheel motor MW based on the degree of inclination of the robot 1.

If the robot 1 is tilted forward more than the inclination of the preset basic posture, the wheel motor MW may be driven to rotate the wheel 310 backward so that the robot 1 returns to the basic posture.

If the robot 1 is tilted backward more than the inclination of the preset basic posture, the wheel motor MW may be driven to rotate the wheel 310 forward so that the robot 1 may returns to the basic posture.

Meanwhile, as described above, the degree of tilt of the robot 1 may be measured by the IMU sensor 650.

The robot 1 may drive on the ground using the rotation drive of the wheel 310 while maintaining the basic posture described above, and then perform a posture change to a specific posture different from the basic posture.

The posture change may be performed when a specific preset event occurs or when a specific preset condition is satisfied.

In an embodiment of the present disclosure, the posture change of the robot 1 means a change from the basic posture to a specific posture or a change from a specific posture to the basic posture (hereinafter, may also be referred to as a return to the basic posture).

In the robot 1 according to the embodiment of the present disclosure, when such a posture change is performed, the rotation drive of the arm 400 may be necessarily performed. At this time, an operation in which the position of the connecting portion 420 is changed by the rotation drive of the arm 400 may be accompanied.

In the embodiment of the present invention, the leg unit 200 of the robot 1 may include an upper link and a lower link.

The upper link may be defined as a concept including the first link 210 and the second link 220, which are link structures arranged on the side of the robot body 100. The lower link may be defined as a concept including the third link 230, which is a link structure arranged on the side of the wheel 310.

The upper link and the lower link may be linked to each other to form a joint structure. Through the movement of the joint structure, the robot body 100 may move up or down during driving.

More specifically, the upper link and the lower link may maintain a constant coupling angle in the basic posture of the robot 1. Here, the coupling angle of the upper link and the lower link may mean the coupling angle between the first link 210 and the third link 230. The above-mentioned coupling angle may mean an acute angle formed by the first link 210 and the third link 230 based on the connection point of the first link 210 and the third link 230.

The adjustment of the coupling angle, i.e., the movement of the above-mentioned joint structure, may be implemented by controlling the driving of the suspension motor MS. As the suspension motor MS rotates and the coupling angle decreases, the robot body 100 may descend toward the ground. As the suspension motor MS rotates and the coupling angle increases, the robot body 100 may rise in the opposite direction to the ground.

Meanwhile, as explained above, in the basic posture of the robot 1, the above-mentioned coupling angle may be maintained at a size formed by the restoring force of the gravity compensation unit. Since the restoring force of the gravity compensation unit is applied, the rotational drive of the suspension motor MS to maintain the basic posture is unnecessary.

### Charging station:

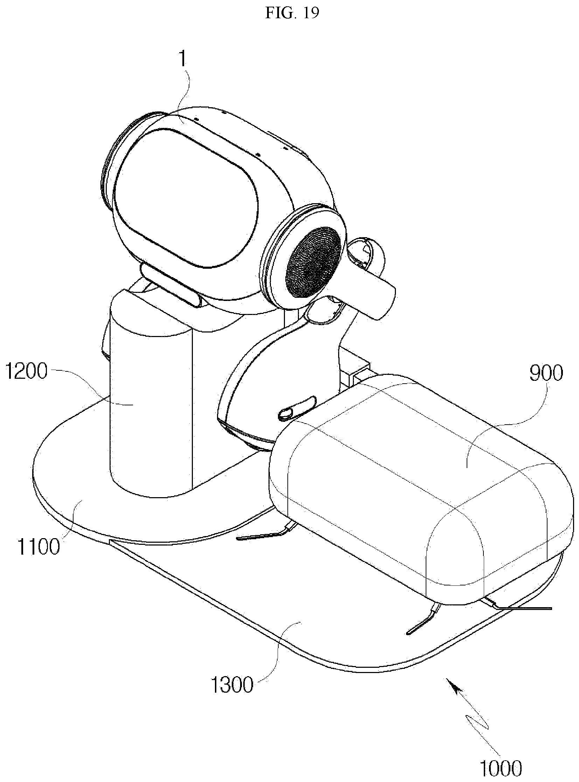

Hereinafter, referring to FIGS. 19 to 25, the charging station 1000 according to the embodiments of the present disclosure is described as follows.

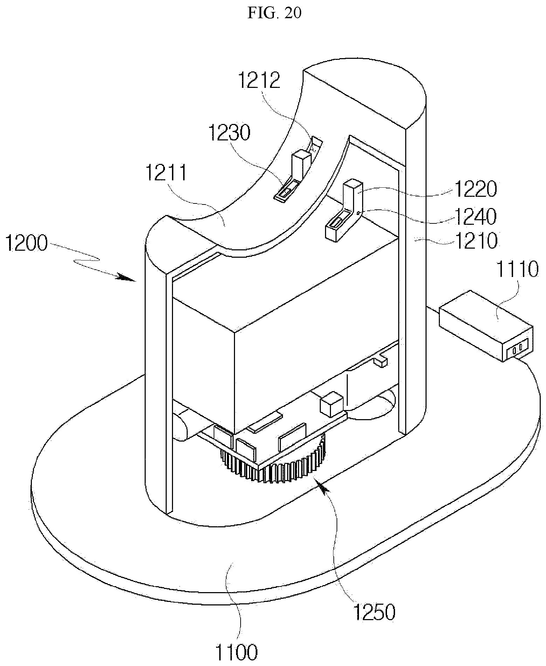

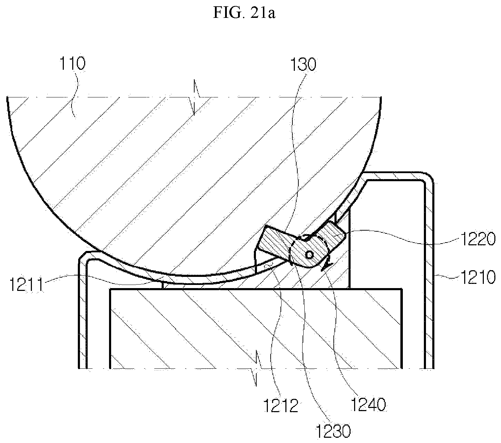

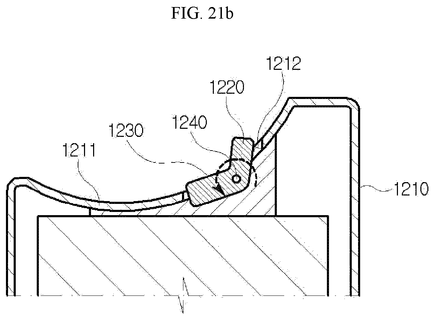

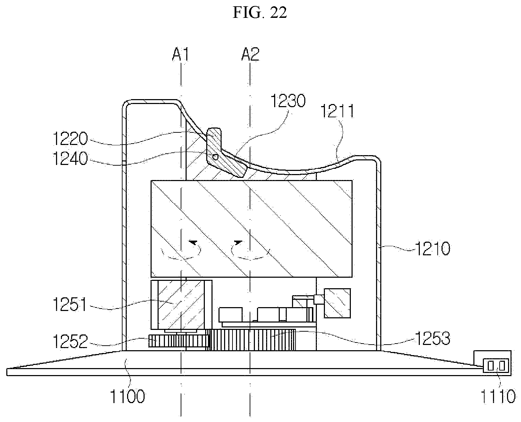

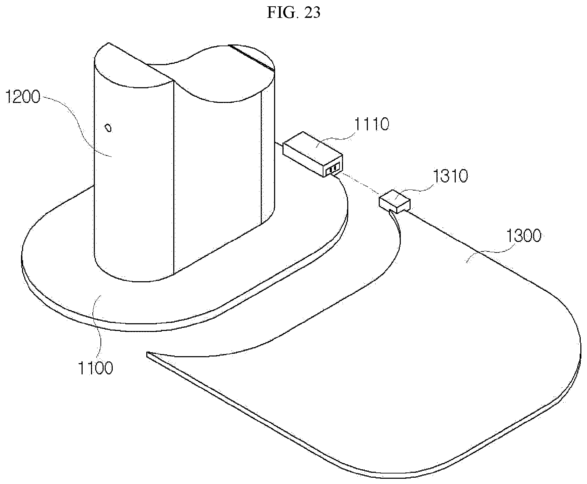

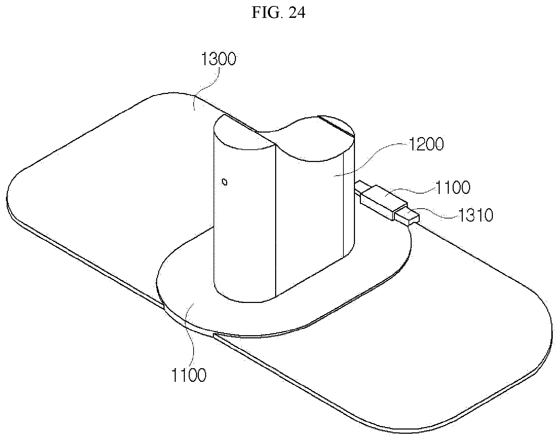

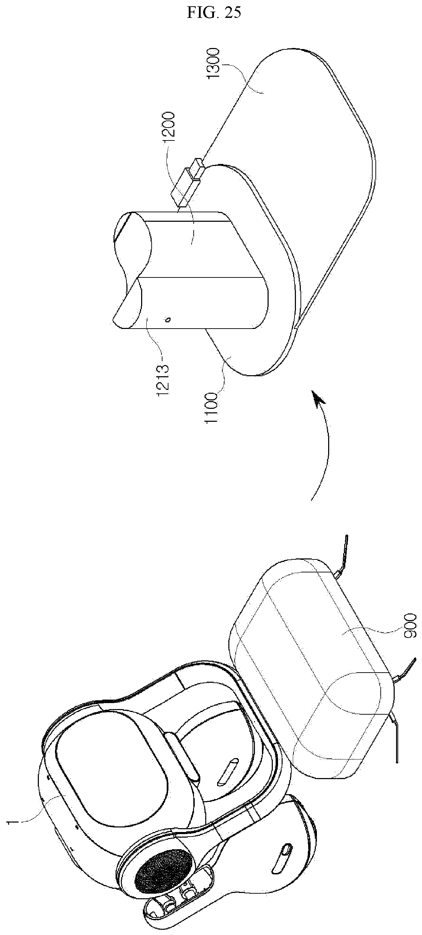

FIG. 19 is a perspective view of a robot system including a robot, a charging station, and a function module according to one embodiment. FIG. 20 is a view to describe the configuration of the charging station according to one embodiment. FIG. 21a is a side cross-sectional view to describe a state in which a robot is mounted to a charging station according to one embodiment. FIG. 21b is a side cross sectional view to describe a state in which the mounting between the charging station and the robot according to one embodiment is released. FIG. 22 is a side cross-sectional view to describe a power transfer unit of the charging station according to one embodiment. FIG. 23 is a perspective view to describe a function module charging unit of the charging station according to one embodiment. FIG. 24 is a perspective view to describe a state in which a function module charging unit is coupled to both sides of a station body in the charging station according to one embodiment. FIG. 25 is a view to describe a state in which a robot according to one embodiment transports a function module to the charging station.

Referring to FIG. 19 and FIG. 20, the charging station 1000 is configured to charge at least one of the robot 1 and the function module 900, and may include a station body 1100, a robot charging unit 1200, and a function module charging unit 1300.

Before describing each configuration, let us first define the direction of the charging station 1000. The direction in which the entrance through which the robot 1 enters the charging station 1000 is arranged may be defined as the front, and the direction in which the expansion terminal 1110 described later is arranged may be defined as the rear. In addition, the front and the rear may be opposite directions.

The station body 1100 may be placed on the ground so that the robot 1 may approach it. The station body 1100 may support the robot charging unit 1200, and the wheel 310 of the robot 1 may move in a rolling manner on the upper surface of the station body 1100. That is, when the robot 1 is seated on the robot charging unit 1200, the wheel 310 may come into contact with the upper surface of the station body 1100. In addition, the station body 1100 may be physically and/or electrically connected to the robot charging unit 1200.

The station body 1100 may include an expansion terminal 1110 that supplies power to the function module charging unit 1300. The expansion terminal 1110 may be connected to a connection terminal 1310 to be described later. When the station body 1100 and the function module charging unit 1300 are connected through the expansion terminal 1110, the function module charging unit 1300 may receive power from the station body 1100 and/or the robot charging unit 1200. Therefore, the station body 1100 may be physically and/or electrically connected to the function module charging unit 1300 through the expansion terminal 1110.

The robot charging unit 1200 is provided to supply power to the robot 1 to charge it, and may include a charging unit body 1210, a rotating member 1220, a power supply terminal 1230, an elastic member 1240, and a power transmission unit 1250.

The charging unit body 1210 has a space inside, and may be coupled to the station body 1100 so as to be rotatable relative to it. The charging unit body 1210 may be coupled to the station body 1100 so as to be relatively rotatable by a motor 1251 to be described later.

Although not shown, a plug connected to an outlet in a home may be pulled out from the rear of the charging unit body 1210. Since outlets are generally provided on walls in homes, the charging unit body 1210 may be arranged so that its rear faces the wall.

The charging unit body 1210 may include a mounting surface 1211 on which the robot body housing 110 of the robot body 100 is mounted. The mounting surface 1211 may be formed to correspond to the lower surface of the body housing 110. For example, the mounting surface 1211 may be formed concavely toward the internal space of the charging unit body 1210.

The outer surface of the body housing 110 in contact with the mounting surface 1211 may have a predetermined curvature, and the mounting surface 1211 may have a curvature corresponding to the outer surface. With this configuration, even if the charging terminal 130 is not at a position corresponding to the power supply terminal 1230, when the body housing 110 is lowered toward the mounting surface 1211, the position of the body housing 110 may be accurately guided during the mounting process of the body housing 110. Therefore, there is an effect of being able to accurately mount the robot body 100 on the robot charging unit 1200 without a separate sensor.

The charging unit body 1210 may include an introduction hole 1212. The introduction hole 1212 may be formed in a long hole shape along the mounting surface 1211 so that the rotating member 1220 may enter and exit. For example, the introduction hole 1212 may be a rectangular hole formed along the mounting surface 1211.

The charging unit body 1210 may include a light emitting unit 1213. The light emitting unit 1213 is arranged in the internal space of the charging unit body 1210, and the light irradiated by the light emitting unit 1213 may be irradiated toward the outside of the charging unit body 1210. The light emitting unit 1213 may be an IR LED that irradiates infrared rays. At this time, the IR LED may be exposed to the front of the charging unit body 1210.

The IR sensor 620 of the robot 1 may detect infrared rays radiated by the light emitting unit 1213. When the IR sensor 620 detects infrared rays, the robot 1 may move in the direction in which the infrared rays are detected and approach the charging station 1000. When the robot 1 approaches the lamp, the mapping camera 610 may detect the shape of the charging station 1000.

The robot 1 may approach the charging station 1000 by relying on the IR sensor 620 until the charging station 1000 is recognized by the mapping camera 610. After the charging station 1000 is recognized by the mapping camera 610 of the robot 1, the posture of the robot 1 may be precisely aligned through the mapping camera 610 to enter the charging station 1000.

As a result, the time for searching the charging station 1000 may be saved compared to the case where the charging station 1000 is detected only by relying on the vision of the camera.

The rotating member 1220 is rotatably coupled to the charging unit body 1210 and may rotate in different directions based on whether the robot 1 is seated on the charging unit body 1210.

Specifically, when a load of the robot 1 is applied to one side of the rotating member 1220, the rotating member 1220 may be rotated in a first direction (clockwise in FIG. 21a) with respect to the charging unit body 1210. That is, when the body housing 110 is lowered and settled on the mounting surface 1211, one side of the rotating member 1220 may be pressed to rotate the rotating member 1220.

The power supply terminal 1230 is arranged on the other side of the rotating member 1220 and may be electrically connected to the charging terminal 130 of the robot 1. Specifically, the power supply terminal 1230 may come into contact with the charging terminal 130 of the robot 1 when the rotating member 1220 is rotated in a first direction (clockwise in FIG. 21a) with respect to the charging unit body 1210. That is, when the robot 1 and the charging station 1000 are electrically connected, power may be supplied from the charging station 1000 to the robot 1. In other words, the battery B of the robot 1 may be charged.

The elastic member 1240 may provide elastic force to the rotating member 1220 so that the rotating member 1220 rotates in the second direction (counterclockwise in FIG. 21B). That is, when the body housing 110 rises and the connection between the robot 1 and the robot charging unit 1200 is released, the elastic member 1240 may provide rotational force to the rotating member 1220 so that the power supply terminal 1230 is introduced into the internal space of the charging unit body 1210.

As an example, the elastic member 1240 may be a torsion spring. The elastic member 1240 may be wound to surround the rotation axis of the rotating member 1220. In addition, one end of the elastic member 1240 may be fixedly coupled to the charging unit body 1210, and the other end of the elastic member 1240 may be fixedly coupled to the rotating member 1220.

The elastic member 1240 may apply force (rotational force) to the rotation member 1220 in the direction in which the power supply terminal 1230 is introduced into the inner space of the charging unit body 1210. For example, the elastic member 1240 may have both ends of the elastic member 1240 folded in advance so that the rotation member 1220 applies a restoring force to rotate in the second direction (counterclockwise in FIG. 21b). Accordingly, when the coupling between the robot 1 and the robot charging unit 1200 is released and the rotation member 1220 is rotated in the second direction (counterclockwise in FIG. 21b), the power supply terminal 1230 may be introduced into the charging unit body 1210.

With this configuration, when the robot 1 and the robot charging unit 1200 are disconnected, the power supply terminal 1230 may be located in the internal space of the charging unit body 1210. Therefore, when the robot 1 is not charged, there is an effect of protecting the power supply terminal 1230 from external impact, etc.

The power transmission unit 1250 is accommodated in the internal space of the charging unit body 1210 together with the motor 1251, and may be configured with a plurality of power transmission members to transmit power generated by the rotation of the motor 1251 to the charging unit body 1210.

Referring to FIG. 22, the power transmission unit 1250 may include a motor 1251, a first rotation gear 1252, and a second rotation gear 1253.

The motor 1251 may be accommodated in the internal space of the charging unit body 1210 and may generate power so that the charging unit body 1210 may rotate relative to the station body 1100. The motor 1251 may rotate around a first rotational axis A1 that penetrates the charging unit body 1210 in the vertical direction.

The first rotational gear 1252 may be accommodated in the internal space of the charging unit body 1210 and may rotate by receiving the rotational power of the motor 1251. The first rotational gear 1252 may be coaxially connected to the first rotational axis A1 of the motor 1251 depending on the arrangement of the motor 1251, or may be indirectly connected to the motor 1251 through another gear component that is provided to change the direction of the first rotational axis A1 of the motor 1251.

The second rotation gear 1253 may be accommodated in the internal space of the charging unit body 1210 and is gear-coupled with the first rotation gear 1252 to receive the rotational force of the first rotation gear 1252 and rotate the charging unit body 1210. The second rotation gear 1253 may rotate in the opposite direction to the first rotation gear 1252.

The second rotation gear 1253 may rotate around the second rotation axis A2. The second rotation axis A2 may be fixedly connected to the center of the second rotation gear 1253, and the second rotation axis A2 may be rotatably connected with respect to the station body 1100. Therefore, when the first rotation gear 1252 rotates around the first rotation axis A1, the second rotation gear 1253 may rotate around the second rotation axis A2 and rotate the charging unit body 1210 relative to the station body 1100.

Referring to FIG. 23 and FIG. 24, the function module charging unit 1300 is detachably connected to the station body 1100, and when electrically connected to the function module 900, it may supply power to the robot 1 to charge it. The function module charging unit 1300 may be detachably connected to both sides of the station main body 1100. Therefore, if the user needs to charge the function module 900 other than the robot 1, the user may selectively connect the function module charging unit 1300 to the station main body 1100 and use it.

The function module charging unit 1300 may share power with the robot charging unit 1200. Power supplied to the robot charging unit 1200 from the outside may be shared with the function module charging unit 1300. For example, the robot charging unit 1200 and the function module charging unit 1300, which are connected and synchronized with each other, share power, so that even if one charging unit runs out of power, the entire charging station 1000 may operate by sharing power with the other charging unit.

Also, although not shown, a plug connected to an outlet in the home may be pulled out from the back of the function module charging unit 1300. Since outlets are generally provided on walls in homes, the function module charging unit 1300 may be placed so that its back faces the wall.

The function module charging unit 1300 may wirelessly supply power to the function module 900 to charge it. That is, when the function module 900 is placed on the function module charging unit 1300, the function module charging unit 1300 may charge the function module 900 by utilizing the electromagnetic induction phenomenon generated by the primary coil and the secondary coil.

As an example, the function module charging unit 1300 may include a wireless charging pad (not shown). The wireless charging pad may be placed on the top or in the internal space of the function module charging unit 1300. Accordingly, the function module 900 may be configured to be installed on the wireless charging pad.

The wireless charging pad may receive power from the charging unit body 1210 and may include a wireless power transmitter or a wireless power transceiver. The function module 900 may include a wireless power transmitter or a wireless power transceiver configured to be coupled with a battery (not shown) and the wireless power transmitter or the wireless power transceiver included in the wireless charging pad. The battery of the function module 900 may be wirelessly charged through the wireless charging pad and may provide power for the operation of the function module 900.

The function module charging unit 1300 may include a connection terminal 1310. The function module charging unit 1300 may be connected to the station body 1100 through the connection terminal 1310. When the connection terminal 1310 is connected to the charging terminal 130 of the station main body 1100, the function module charging unit 1300 may receive power from the station body 1100 and/or the robot charging unit 1200. Therefore, the connection terminal 1310 may physically and/or electrically connect the station body 1100 and the function module charging unit 1300.

The charging station 1000 may further include a station control unit (not shown).

The station control unit may be placed in the internal space of the charging unit body 1210. The station control unit may be installed on a PCB placed in the internal space of the charging unit body 1210. The station control unit may control the overall operation of the charging station 1000.

As an example, the station control unit may control the driving of the motor 1251 to rotate the charging unit body 1210. The station control unit may control the charging unit body 1210 to rotate when the charging terminal 130 of the robot 1 is electrically connected to the power supply terminal 1230. The station control unit may control the rotation of the charging unit body 1210 to stop when the charging unit body 1210 rotates 180 degrees.

Meanwhile, the station control unit may include all kinds of devices capable of processing data, such as a processor. Here, the 'processor' may mean a data processing device built into hardware, which has a physically structured circuit to perform a function expressed by a code or command included in a program, for example. Examples of such data processing devices built into hardware may include processing devices such as a microprocessor, a central processing unit (CPU), a processor core, a multiprocessor, an application-specific integrated circuit (ASIC), and a field programmable gate array (FPGA), but the scope of the present invention is not limited thereto.

### Method of charging Robot:

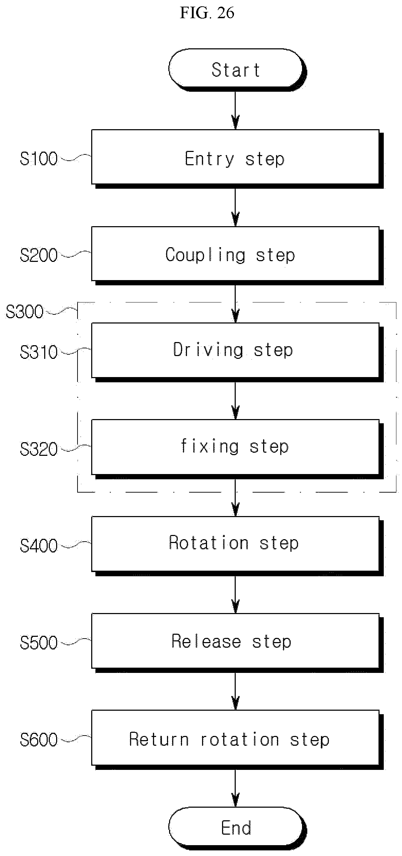

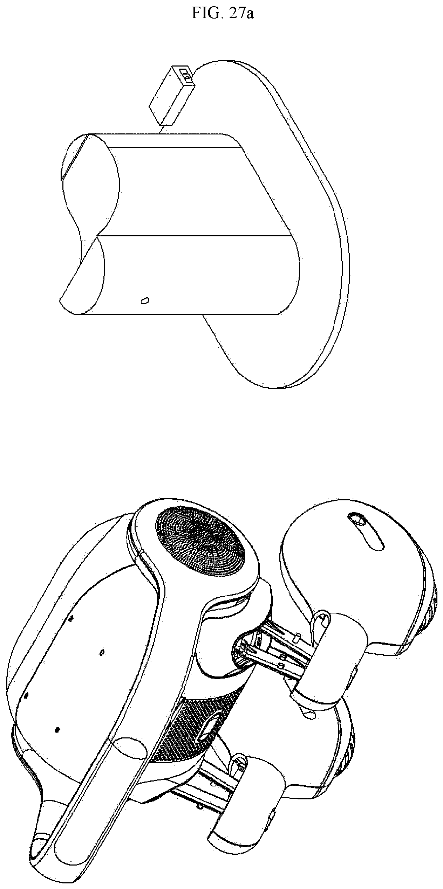

Hereinafter, referring to FIGS. 26 to 27f, a method of charging a robot according to one embodiment is described as follows.

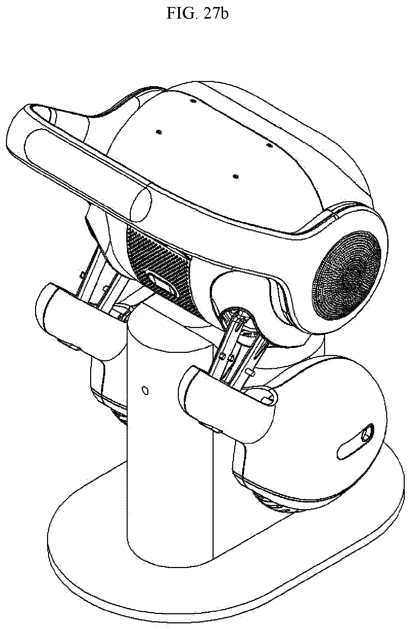

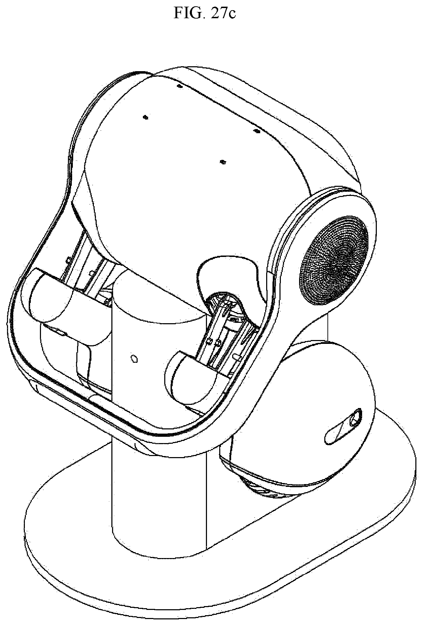

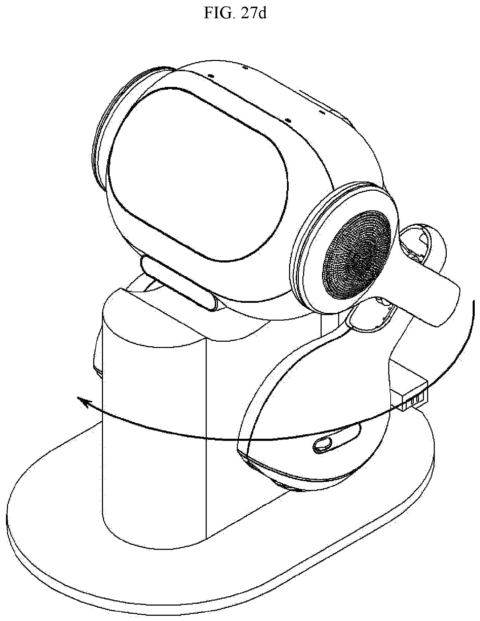

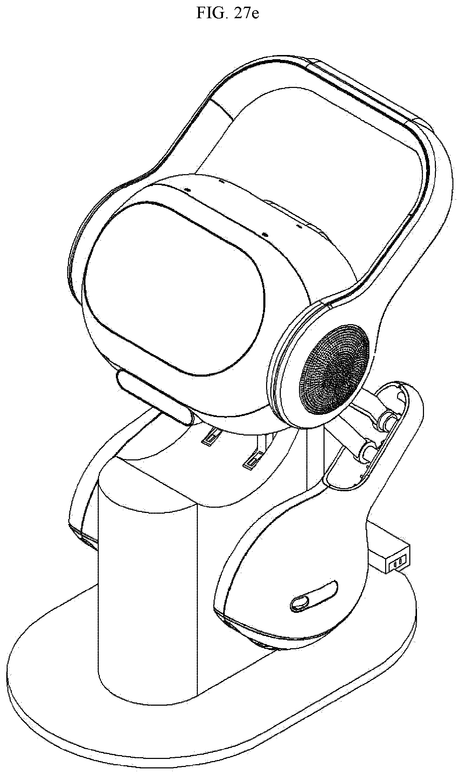

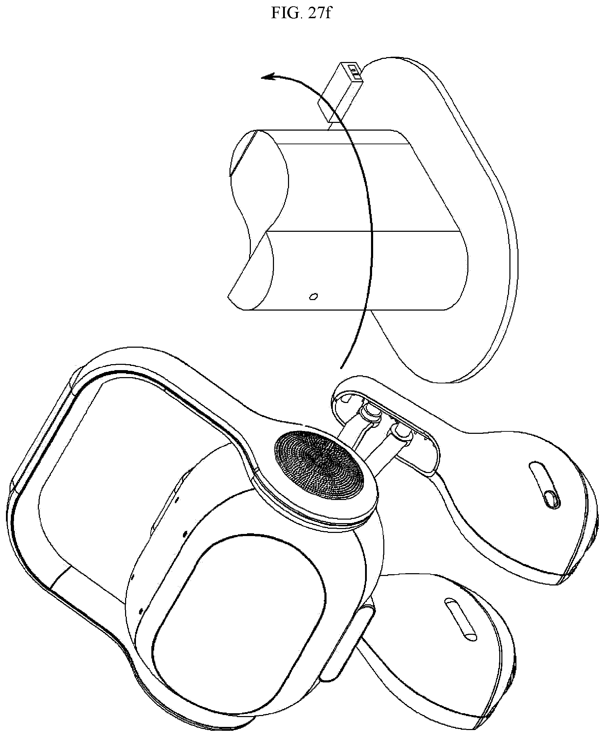

FIG. 26 is a flow chart showing the method of charging the robot according to one embodiment. FIGS. 27a and 27b are views showing an operation corresponding to S100 of FIG. 26. FIG. 27c is a view showing an operation corresponding to S200 and S300 of FIG. 26. FIG. 27d is a view showing an operation corresponding to S400 of FIG. 26. FIG. 27e is a view showing an operation corresponding to S500 of FIG. 26. FIG. 27f is a view showing an operation corresponding to S600 of FIG. 26.

The method of charging the robot according to the embodiment of the present invention may be performed by the robot 1 and the charging station 1000 configured to supply power to the robot 1 to charge it.

Referring to FIG. 26, the method of charging the robot according to the embodiment may include an entry step S100, a coupling step S200, a raising step S300, a rotation step S400, a release step S500, and a return rotation step S600.

The entry step S100 is a step in which the wheel of the robot 1 moves to approach the charging station 1000 and climbs onto the station body 1100.

The robot 1 may start searching the charging station 1000 by a user's command or by a charge remaining amount below a predetermined level. As described above, the search for the charging station 1000 is performed by the cooperation of the IR sensor 620 and the mapping camera 610. The position of the charging station 1000 may be obtained as a direction vector for the robot 1. Using this, the robot 1 may align its posture so that the charging station 1000 is placed in front of itself. (See FIGS. 27a and 27b)

A sensor capable of measuring the distance to the robot charging unit 1200 may be provided at the front of the robot body 100. For example, the sensor may be a ToF sensor (Time of Flight sensor). With this configuration, the control unit 700 may recognize the distance between the robot 1 and the robot charging unit 1200 and calculate the distance that the robot 1 must move to settle on the mounting surface 1211.

Next, the coupling step S200 is a step in which the charging terminal 130 of the robot 1 and the power supply terminal 1230 of the charging station 1000 are electrically connected to each other so that power is supplied to the robot 1 when the robot 1 is placed on the charging station 1000.

n the coupling step S200, the robot body (100) is moved downward while being spaced apart from the mounting surface 1211 so that the charging terminal 130 and the power supply terminal 1230 are contact-coupled to each other, and the lowering of the robot body 100 is performed by driving the suspension motor MS.

At this time, the suspension motor MS is driven to rotate so that the angle between the first link 210 and the third link 230 decreases. The decrease in the angle between the first link 210 and the third link 230 means that the distance between the wheel 310 and the robot body 100 is shortened, i.e., the robot body 100 is lowered.

The rotational drive of the suspension motor MS continues until the charging terminal 130 and the power supply terminal 1230 are contacted and coupled with each other. As described above, the power supply terminal 1230 comes into contact with the charging terminal 130 by the rotation of the rotating member 1220. As a result, the robot 1 and the charging station 1000 may be electrically connected to each other, and the battery B of the robot 1 may be charged.

Meanwhile, in the coupling step S200, the lower side of the body housing 110 comes into contact with the mounting surface 1211 of the charging station 1000, and the robot 1 is placed on the charging station 1000 in a form of leaning against the charging station 1000 and resting. (See FIG. 27c)

The raising step S300 is a step of raising the wheel 310 to a set height so that it is separated from the station body 1100 by a set distance.

In the raising step S300, even if the robot 1 is mounted on the robot charging unit 1200, since the wheel 310 is not in contact with the station body 1100, the robot 1 may be stably mounted on the robot charging unit 1200 without interference from the station body 1100.

The raising step S300 may include a driving step S310 and a fixing step S320.

The driving step S310 may further include a driving step S310 for driving a suspension motor MS so that the distance between the wheel 310 and the robot body 100 is reduced.

In the driving step S310, the distance between the wheel 310 and the robot body 100 may be reduced until the wheel 310 is raised to a set height. (See FIG. 27c)

At this time, the set height may be the height at which the wheel 310 is positioned when the surface of the wheel 310 and the upper surface of the station body 1100 are separated by a predetermined distance.

More specifically, when the suspension motor MS is driven, the first link 210 rotates with the motor coupling portion 212 as the axis, and the link coupling portion 213 moves upward. Then, the third link 230 moves according to the rotation of the first link 210. Then, the second link 220 is pushed by the third link 230 and rotates. As a result, one end of the third link 230 may move backward, and the other end of the third link 230 may move upward.

With this configuration, when the suspension motor MS is driven, the wheel 310 may move upward, thereby reducing the distance between the wheel 310 and the robot body 100.

In the driving step S310, the coupling angle between the upper link and the lower link of the leg unit 200 may be reduced compared to the basic posture. Specifically, in the driving step S310, the coupling angle between the first link 210 and the third link 230 and the coupling angle between the second link 220 and the third link 230 may all be reduced.

In the fixing step S320, when the wheel 310 is raised to the set height, the rotation protrusion 480 that rotates together with the arm 400 comes into contact with the stopper 240 formed on the upper link, so that the movement of the joint structure between the upper link and the lower link may be restricted (fixed).

When the arm 400 rotates downward and the rotary protrusion 480 comes into contact with the stopper 240, the joint structure movement of the leg unit 200 may be restricted. More specifically, the stopper 240 may be formed in a shape that surrounds at least a portion of the rotary protrusion 480, that is, in a shape corresponding to the outer shape of the rotating protrusion 480, and accordingly, when the stopper 240 and the rotating protrusion 480 come into contact, the stopper 240 may surround a part of the outer shape of the rotary protrusion 480 and engage with each other.

In this embodiment, the joint movement of the leg unit 200 is restricted (locked) by the engagement structure of the stopper 240 and the rotating protrusion 480 unless the arm 400 rotates in the opposite direction.

Therefore, in the fixed step S320, the rotational drive of the arm motor MA may be performed up to a position where the stopper 240 and the rotating protrusion 480 come into contact and the rotational range of the arm 400 is limited. That is, when the arm 400 rotates to a point where the stopper 240 and the rotating protrusion 480 come into contact while the wheel 310 is raised to the above-mentioned set height, the drive of the arm motor MA may be stopped. In other words, the further rotation of the arm 400 may be limited by the contact between the rotating protrusion 480 of the arm 400 and the stopper 240.

Next, the rotation step S400 is a step in which the robot charging unit 1200 of the charging station 1000 rotates together with the robot 1 to change the direction facing the front of the robot 1 by 180 degrees.

More specifically, in the rotation step S400, the station control unit of the charging station 1000 controls the motor 1251 to rotate the robot charging unit 1200. The robot charging unit 1200 rotates clockwise or counterclockwise and stops when it completes a rotation of 180 degrees from the previous state. (See FIG. 27d)

At this time, the front of the robot 1 means the direction in which the display 120 faces. Or, it means the direction in which the mapping camera 610 faces. As described above, the charging station 1000 is generally placed in a home so that its rear faces the wall. That is, before the robot charging unit 1200 rotates, the front of the robot 1 faces the wall, and after the robot charging unit 1200 rotates, the front of the robot 1 faces the wall. In this way, when the charging of the robot 1 is completed, it may move forward without having to move backward from the charging station 1000.

The charging method of the robot according to the embodiment of the present invention may further include a release step S500.

In the release step S500, the connection between the charging terminal 130 and the power supply terminal 1230 is released. That is, the electrical connection between the robot 1 and the charging station 1000 is released. Here, the release may be performed by an electrical signal generated by the station control unit. (See FIG. 27e)

At this time, the rotational drive of the arm motor MA in the release step S500 may be performed in the opposite direction to the rotational drive of the arm motor MA in the fixing step S320. For example, if the arm motor MA is driven so that the arm 400 rotates downward in the fixing step S320, the arm motor MA may be driven so that the arm 400 rotates upward in the release step S500.

In addition, when the connection between the robot 1 and the charging station 1000 is released, the robot body 100 moves upward by the restoring force of the gravity compensation unit and/or the driving of the suspension motor MS. At the same time or sequentially, the display 120 that was tilted backward rotates forward.

At this time, the release of the contact and/or the release of the interlocking structure between the stopper 240 and the rotating protrusion 480 is performed according to the rotation in the opposite direction to the rotational driving of the arm motor MA in the fixing step S320, so that the leg unit 200 may be unlocked. However, since the suspension motor (MS) is driving, the leg unit 200 does not suddenly unfold.

The method of charging the robot according to the embodiment of the present invention may further include a return rotation step (S600).

In the return rotation step S600, when the robot 1 completes charging or leaves the charging station 1000 by a user's command, the robot charging unit 1200 rotates to return to the initial position. In other words, the robot charging unit 1200 rotates 180 degrees to return to the original position. (See FIG. 27f)

Whether or not to rotate 180 degrees may be determined by the station control unit depending on whether or not the electrical connection between the charging terminal 130 and the power supply terminal 1230 is established. That is, the station control unit may rotate the robot charging unit 1200 180 degrees after a predetermined time if the connection between the charging terminal 130 and the power supply terminal 1230 is released.

As a result, the robot 1 may enter the charging station 1000 again for charging by moving forward.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention.

Further, although the operating effects according to the configuration of the present invention are not explicitly described while describing an embodiment of the present invention, it should be appreciated that predictable effects are also to be recognized by the configuration.

## Claims

1. A charging station configured to charge a robot and at least one of function modules detachably coupled to the robot, the charging station comprising:
a station body placed on the ground to that the robot may approach;
a robot charging unit rotatably coupled to the station body to rotate relative thereto and configured to supply power to the robot and charge it, if electrically connected to the robot; and
a function module charging unit detachably coupled to the station body and configured to supply power to the function module and charge it, if electrically connected to the function module.

2. The charging station of claim 1, wherein the function module charging unit wirelessly supplies power to the function module to charge it.

3. The charging station of claim 1, wherein the robot charging unit comprises,
a charging unit body comprising a mounting surface on which the robot is mounted and configured to rotate by the rotation of the motor;
a rotating member configured to rotate in a first direction with respect to the charging unit body, if a load of the robot is applied to one side of the rotating member;
a power supply terminal arranged on the other side of the rotating member and configured to be connected to the charging terminal of the robot, if the rotating member is rotated in the first direction; and
an elastic member configured to provide elasticity to the rotating member so that the rotating member rotates in a second direction which is the opposite direction to the first direction.

4. The charging station of claim 3, wherein when the rotating member is rotated in the second direction, the power supply terminal is located in the internal space of the charging unit body.

5. The charging station of claim 3, wherein an outer surface of the robot in contact with the mounting surface has a curvature corresponding to the curvature of the mounting surface.

6. The charging station of claim 3, wherein the robot charging unit further comprises,
a power transmission unit accommodated in the internal space of the charging unit body together with the motor and configured to transmit power generated by the rotation of the motor to the charging unit body.

7. The charging station of claim 6, wherein the power transmission unit comprises,
a first rotation gear configured to receive the rotational power of the motor and rotate; and
a second rotation gear configured to receive the rotational power of the first rotation gear and rotate the charging unit body.

8. A charging station configured to charge a robot and at least one of function modules detachably coupled to the robot, the charging station comprising:
a station body placed on the ground to that the robot may approach; and
a robot charging unit rotatably coupled to the station body to rotate relative thereto and configured to supply power to the robot and charge it, if electrically connected to the robot,
wherein the robot charging unit comprises,
a charging unit body on which the robot is mounted and configured to rotate by the rotation of the motor;
a rotating member configured to rotate in a first direction with respect to the charging unit body, if a load of the robot is applied to one side of the rotating member;
a power supply terminal arranged on the other side of the rotating member and configured to be connected to the charging terminal of the robot, if the rotating member is rotated in the first direction; and
an elastic member configured to provide elasticity to the rotating member so that the rotating member rotates in a second direction which is the opposite direction to the first direction.

9. The charging station of claim 8, wherein when the rotating member is rotated in the second direction, the power supply terminal is located inside the charging unit body.

10. A method of charging a robot, that is performed by a robot system comprising a robot and a charging station configured to supply power to the robot, comprising:
an entry step in which a wheel of the robot moves to approach the charging station and climbs onto the station body of the charging station;
a coupling step in which a charging terminal of the robot and a power supply terminal of the charging station are electrically connected to each other so that power is supplied to the robot when the robot is mounted on the charging station;
a raising step in which the wheel is raised to a set height so that the wheel is separated from the station body by a set distance; and
a rotation step in which the robot charging unit of the charging station rotates together with the robot and changes the direction in which a front side of the robot faces by 180 degrees.

11. The method of charging the robot of claim 10, wherein the robot comprises,
a robot body comprising the charging terminal;
a leg unit arranged on each side of the robot body and coupled with the wheel configured to roll on the ground;
an arm rotatably coupled to each side of the robot body;
a suspension motor configured to adjust the coupling angle of the joint structure between an upper link and a lower link of a leg unit; and
an arm motor configured to rotate the arm with respect to the robot body, and
the raising step comprises,
a driving step of driving the suspension motor so that the distance between the wheel and the robot body decreases; and
a fixing step of restricting the movement of the joint structure by contacting a stopper formed on the upper link when the wheel is raised to a set height and a rotating protrusion configured to rotate together with the arm.

12. The method of charging the robot of claim 10, further comprising:
a release step in which the connection between the charging terminal and the power supply terminal is released; and
a return rotation step in which the robot charging unit rotates to return to an initial position after the robot leaves the charging station.
